(19) Europäisches Patentamt
European Patent Office
Office européen des brevets

(11) EP 4 249 518 B1

(12) # EUROPEAN PATENT SPECIFICATION

(45) Date of publication and mention of the grant of the patent:
**06.11.2024 Bulletin 2024/45**

(21) Application number: **22305363.8**

(22) Date of filing: **25.03.2022**

(51) International Patent Classification (IPC):
***C08F 2/50*** *(2006.01)* ***C09D 4/00*** *(2006.01)*

(52) Cooperative Patent Classification (CPC):
(C-Sets available)
**C09D 4/00; C08F 2/50** (Cont.)

(54) **POLYMERIZABLE PHOTOINITIATORS**
POLYMERISIERBARE FOTOINITIATOREN
PHOTOINITIATEURS POLYMÉRISABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2023 Bulletin 2023/39**

(73) Proprietor: **ARKEMA FRANCE**
**92700 Colombes (FR)**

(72) Inventors:
- **CICERON, Philippe**
**60550 VERNEUIL EN HALATTE (FR)**
- **DEMOULIN, Kevin**
**60550 VERNEUIL EN HALATTE (FR)**
- **MELEC, Pierre**
**60550 VERNEUIL EN HALATTE (FR)**
- **BOURROUSSE, Charles**
**92700 COLOMBES (FR)**

(74) Representative: **Arkema Patent**
**Arkema France**
**DRD-DPI**
**420, rue d'Estienne d'Orves**
**92705 Colombes Cedex (FR)**

(56) References cited:
**US-A1- 2010 304 149** **US-B2- 8 530 510**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 4/00, C08F 220/36, C08F 222/1006;**
**C09D 4/00, C08F 228/06, C08F 222/1006**

## Description

### Field of the Invention

The present invention relates to a binder comprising polymerizable photoinitiators and multifunctional (meth)acrylates, to a process for preparing the binder, to a polymerizable composition comprising the binder. The invention also relates to different uses of the binder or polymerizable composition.

### Background of the Invention

Radiation curable compositions containing ethylenically unsaturated compounds can be polymerised by exposure to radiation, such as ultraviolet (UV) light. For rapid and effective curing, a photoinitiator is often used. The photoinitiator forms radical species upon irradiation with photons and initiates free-radical polymerisation of unsaturated groups, leading to hardening (curing) of the material.

Free radical photoinitiators can adopt two different modes of action, and are classified by mode of action as Norrish Type I and Norrish Type II Photoinitiators. Norrish Type I photoinitiators cleave upon exposure to radiation, producing radical species which are capable of initiating the polymerisation of unsaturated compounds. Norrish Type II photoinitiators are compounds which do not fragment upon exposure to radiation and so will not typically initiate radical-chain polymerisation unless a co-initiator is present. Upon exposure to radiation, interaction between the Type II photoinitiator and the co-initiator leads to the generation of radical species which can initiate the polymerisation of UV-curable resins.

The most common Type-II photoinitiators are diaryl ketones such as benzophenones (e.g. SpeedCure® BP available from Lambson Limited) or thioxanthones such as 2-isopropylthioxanthone (SpeedCure® 2-ITX available from Lambson Limited) or diethylthioxanthone (SpeedCure® DETX available from Lambson Limited).

One well recognized problem with the use of UV curable systems for coating and adhesive applications is the fate of the photo-by products created by the curing process. In the case of typical $\alpha$-cleavage type photoinitiators, the production of benzaldehyde (and often related compounds) is often a significant concern from both a toxicity and product odor standpoint.

Such concerns become especially important when the use of radiation curable materials is considered for applications that involve skin or food contact. Various effective approaches have been taken to reduce the odor and extractable by-product content of UV curable materials. One approach has been the use of co-polymerizable or polymeric photoinitiators which are chemically incorporated into the cured polymeric matrix as opposed to remaining in the irradiated material as a small molecule (see (a) Fouassier, J. P.; Rabek, J. F., Eds. Radiation Curing in Science and Technology, 1993, Elsevier Appl. Sci., vol. 2, 283-321. (b) Fouassier, J. P. Photoinitiation, Photopolymerization and Photocuring, Fundamentals and Applications, 1995, Hanser Publishers, 71-73.).

The use of polymerizable or polymeric H-abstraction type photoinitiators, in principle, presents the possibility of creating a system with zero extractable components related to the photoinitiation system. Various groups have presented systems based upon poly(vinyl benzophenone) and its copolymers or polymers derived from acrylated benzophenone derivatives (see (a) David, C.; Demarteu, W.; Geuskens, G. Polymer, 1969, 10, 21-27. (b) Carlini, C.; Ciardelli, F.; Donati, D.; Gurzoni, F. Polymer, 1983, 24, 599-606.). The direct use of acrylated benzophenones has also been disclosed (U.S. Pat. No. 3,429,852). Unfortunately, these Type II systems often suffer from issues related to photoefficiency relative to analogous small molecule photoinitation systems. Thus, it is often most desirable to use polymeric photoinitiators as opposed to polymerizable photoinitiators.

(Meth)acrylated photoinitiators may be obtained from hydroxylated photoinitiators. For example, (meth)acrylated photoinitiators may be obtained by esterification of a hydroxylated photoinitiator with (meth)acrylic acid. However, the use of an acid catalyst is not compatible with the presence of certain desirable functional groups, such as tertiary amine groups, which can enhance the reactivity of the photoinitiator. Another method that may be used to obtain a (meth)acrylated photoinitiator is a transesterification reaction between a hydroxylated photoinitiator and a C1-C6 alkyl (meth)acrylate followed by the azeotropic distillation of the remaining C1-C6 alkyl (meth)acrylate and the C1-C6 alcohol produced during the transesterification reaction. However, this method suffers from several drawback s such as:

- lack of control of the selectivity of the reaction,
- difficulty to control process stability,
- high cost for a low volume production due to loss of a large part of the reagent during azeotropic distillation,
- requires extensive optimization of process parameters,
- cannot be carried out in conventional industrial facility not equipped with specific transesterification equipment.

Accordingly, there continues to be a need in the art for improved H-abstraction photoinitiators useful in the

manufacture of radiation curable adhesives and coating formulations that can be easily manufactured, that do not suffer from the above-identified drawbacks and still produce low odor products with fewer (or no) inherent extractable photochemical by-products. The present development fulfils this need.

The invention is intended to overcome or ameliorate at least some aspects of this problem.

The binder of the invention may be obtained with a simple one-step alcoholysis reaction between a hydroxylated photoinitiator and a multifunctional (meth)acrylate. The resulting mixture of products can be used as a reactive binder in polymerizable compositions. The binder does not need to be purified (i.e. with an azeotropic distillation) as all of its components can be directly introduced in polymerizable compositions. Indeed, contrary to conventional transesterification reactions with a C1-C6 alkyl (meth)acrylate, the alcohol that is produced during the formation of the binder of the invention is a sub-(meth)acrylated compound (i.e. a compound bearing both OH groups and (meth)acrylate groups) which is suitable for use in polymerizable compositions.

The binder of the invention may also present one or more of the following advantages:

- low viscosity,
- good compatibility with other components of a UV formulation (e.g. with (meth)acrylate-functionalized monomers and/or oligomers),
- high reactivity,
- obtained by a simple one-step process that does not involve azeotropic distillation,
- high yield.

The polymerizable compositions comprising the compounds of the invention may present one or more of the following advantages:

- usable in sensitive applications (food and beverage packaging, food and beverage processing, pharmaceutical packaging, nail polish, dental products, textiles in contact with a human body, medical devices, water pipes) due to their low migration properties,

- low viscosity,
- high UV reactivity,
- low yellowing,
- weak odor or no odor,
- good mechanical properties after curing (e.g. hardness, scratch resistance, solvent resistance).

## Summary of the Invention

A first aspect of the invention is a binder comprising a mixture M1 of compounds of formula (1) and a mixture M2 of compounds of formula (2) :

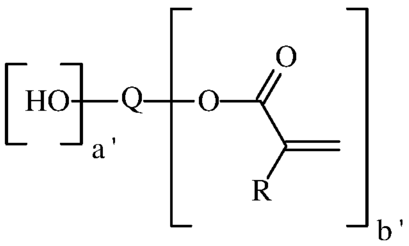 (1)

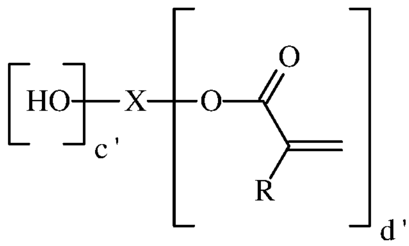 (2)

wherein Q, X, R, a', b', c' and d' are as defined herein.

Another aspect of the invention is a process for preparing a binder according to the invention, wherein the process comprises reacting at least one polyhydroxylated photoinitiator of formula (3) with at least one a multifunctional (meth)acrylate of formula (4), optionally in the presence of a transesterification catalyst, in order to transfer at least part of the (meth)acryloyl groups of the multifunctional (meth)acrylate of formula (4) on at least part of the hydroxy groups of the polyhydroxylated photoinitiator of formula (3):

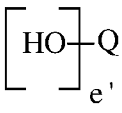
(3)

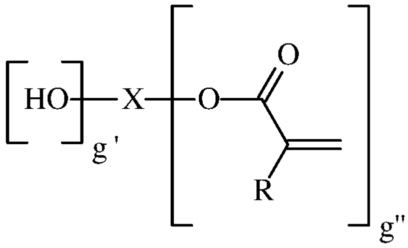
(4)

wherein Q, X, R, e', g' and g" are as defined herein.

Yet another object of the invention is a process for photopolymerizing one or more ethylenically unsaturated compounds comprising contacting one or more ethylenically unsaturated compounds with a binder according to the invention or prepared with the process of the invention, and irradiating the mixture, in particular with visible and/or UV light.

Another aspect of the invention is a polymerizable composition comprising:

a) the binder according to the invention; and
optionally b) an ethylenically unsaturated compound.

In particular, the polymerizable composition may be an ink composition, a coating composition, an adhesive composition, a sealant composition, a molding composition, a dental composition, a cosmetic composition or a 3D-printing composition.

Another aspect of the invention is a process for the preparation of a cured product, comprising curing the binder or the polymerizable composition according to the invention, in particular by exposing the binder or polymerizable composition to radiation such as UV, near-UV and/or visible radiation.

Another aspect of the invention is a process of inkjet printing comprising jetting the binder or the polymerizable composition according to the invention onto a substrate.

Another aspect of the invention is a substrate on which the binder or the polymerizable composition of the invention has been applied. In particular, the substrate may be a food and beverage packaging, a pharmaceutical packaging, a textile, a nail, a tooth, a medical device, a food and beverage processing equipment, a water pipe.

Another aspect of the invention is the use of a binder according to the invention, as a photoinitiating system in a radiation curable composition, in particular in a UV or LED-curable composition.

Another aspect of the invention is the use of a binder according to the invention, in an ink composition, a coating composition, an adhesive composition, a sealant composition, a molding composition, a dental composition, a cosmetic composition or a 3D-printing composition.

Yet another aspect of the invention is the use of a binder according to the invention, to obtain a cured product having a reduced amount of extractables.

## Detailed Description

### Definitions

In the present application, the term "comprise(s) a/an" means "comprise(s) one or more".

Unless mentioned otherwise, the % by weight in a compound or a composition are expressed based on the weight of the compound, respectively of the composition.

The term « (meth)acryloyloxy » means a group of formula $-O-C(=O)-CH(R)=CH_2$ wherein R is H or Me. The term « (meth)acryloyloxy » encompasses both an acryloyloxy group wherein R is H and a methacryloyloxy group wherein R is Me.

The term « (meth)acryloyl » means a group of formula $-C(=O)-CH(R)=CH_2$ wherein R is H or Me. The term « (meth)acryloyl » encompasses both an acryloyl group wherein R is H and a methacryloyl group wherein R is Me.

The term "photoreactive compound, group or linker" means a compound, group or linker that participates in, and/or initiates a photochemical reaction upon irradiation with electromagnetic radiation. A photoreactive compound, group or linker typically comprises a photoinitiator moiety and optionally one or more synergist moieties.

The term "photoinitiator moiety" means a moiety comprising a group capable of absorbing light and generating a reactive species useful to initiate a polymerisation reaction.

The term "synergist moiety" means a moiety comprising a hydrogen-donor group capable of reacting with an activated photoinitiator moiety by hydrogen abstraction to generate a free-radical species.

The term « aryl » means an optionally substituted polyunsaturated aromatic group. The aryl may contain a

single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). The term "aryl" also encompasses partially hydrogenated derivatives of the carbocyclic system is described above. Examples include phenyl, naphtyl, biphenyl, phenanthrenyl and naphthacenyl.

The term « alkyl » means a monovalent saturated acyclic hydrocarbon group of formula - $C_nH_{2n+1}$ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term « heteroatom-containing alkyl » means an alkyl interrupted by one or more heteroatoms independently selected from O, N or S.

The term « halogen » means an atom selected from Cl, Br, F and I.

The term « cycloalkyl » means a monovalent saturated hydrocarbon group comprising a cycle. Examples of cycloalkyl groups include cyclopentyl, cyclohexyl and isobornyl.

The term « heterocycloalkyl » means a cycloalkyl having at least one ring atom that is a heteroatom selected from O, N or S.

The term « alkoxy » means a group of formula -O-alkyl, wherein the alkyl is as defined above.

The term « aryloxy » means a group of formula -O-aryl, wherein the aryl is as defined above.

The term « thioalkyl » means a group of formula -S-alkyl, wherein the alkyl is as defined above.

The term « thioaryl » means a group of formula -S-aryl, wherein the aryl is as defined above.

The term « alkenyl » means a monovalent acyclic hydrocarbon group comprising at least one C=C double bond. An alkenyl may be linear or branched.

The term « alkynyl » means a monovalent acyclic hydrocarbon group comprising at least one C≡C triple bond. An alkynyl may be linear or branched.

The term « aralkyl » means an aryl substituted by an alkyl group. An example of an aralkyl group is tolyl.

The term « alkaryl » means an alkyl substituted by an aryl group. An example of an alkaryl group is benzyl ($-CH_2$-Phenyl).

The term « aralkyloxy » means a group of formula -O-aralkyl, wherein the aralkyl is as defined above.

The term « alkaryloxy » means a group of formula -O-alkaryloxy, wherein the alkaryl is as defined above.

The term « heteroaryl » means an aryl having at least one ring atom that is a heteroatom selected from O, N or S.

The term « alkylamino » means an alkyl substituted by at least one amino group.

The term « alkylthiol » means an alkyl substituted by at least one thiol group.

The term « hydroxyalkyl » means an alkyl substituted by at least one hydroxy group.

The term « haloalkyl » means an alkyl substituted by at least one halogen.

The term « alkylene » or « alkanediyl » means a linker derived from an alkane of formula $C_mH_{2m+2}$ by removing one hydrogen atom at each point of attachment of the linker.

The term "alkoxylated" means a compound, group or linker containing one or more oxyalkylene moieties, in particular one or more oxyalkylene selected from oxyethylene ($-O-CH_2-CH_2-$), oxypropylene ($-O-CH_2-CH(CH_3)-$ or $-O-CH(CH_3)-CH_2-$), oxybutylene ($-O-CH_2-CH_2-CH_2-CH_2-$) and mixtures thereof. For example, an alkoxylated compound, group or linker may contain from 1 to 30 oxyalkylene moieties.

The term « linker » means a plurivalent group. A linker may connect at least two moieties of a compound together, in particular 2 to 16 moieties of a compound together. For example, a linker that connects two moieties of a compound together is referred to as a divalent linker, a linker that connects three moieties of a compound together is referred to as a trivalent linker, etc....

The term « hydrocarbon linker » means a linker having a carbon backbone chain which may optionally be interrupted by one or more heteroatoms selected from N, O, S, P, Si and mixtures thereof. A hydrocarbon linker may be aliphatic, cycloaliphatic or aromatic. A hydrocarbon linker may be saturated or unsaturated. A hydrocarbon linker may be optionally substituted.

The term « aliphatic compound, group or linker » means a non-aromatic acyclic compound, group or linker. It may be linear or branched, saturated or unsaturated. It may be substituted by one or more groups, for example selected from alkyl, hydroxyl, halogen (Br, Cl, I), isocyanate, carbonyl, amine, carboxylic acid, -C(=O)-OR', -C(=O)-O-C(=O)-R', each R' being independently a C1-C6 alkyl. It may comprise one or more bonds selected from ether, ester, amide, urethane, urea and mixtures thereof.

The term « acyclic compound, group or linker » means a compound, group or linker that does not comprise any rings

The term « cycloaliphatic compound, group or linker » means a non-aromatic cyclic compound, group or linker. It may be substituted by one or more groups as defined for the term « aliphatic ». It may comprise one or more bonds as defined for the term « aliphatic ».

The term « aromatic compound, group or linker » means a compound, group or linker comprising an aromatic ring, which means that respects Hückel's aromaticity rule, in particular a compound comprising a phenyl group. It may be substituted by one or more groups as defined for the term « aliphatic ». It may comprise one or more bonds as defined for the term « aliphatic ».

The term « saturated compound, group or linker » means a compound, group or linker that does not comprise any double or triple carbon-carbon bonds.

The term « unsaturated compound, group or linker » means a compound, group or linker that comprises a double or triple carbon-carbon bond, in particular a double carbon-carbon bond.

The term « polyol » means a compound comprising at least two hydroxyl groups.

The term « polyether polyol » or « polyether linker » means a polyol, respectively a linker, comprising at least two ether bonds.

The term « polyester polyol » or « polyester linker » means a polyol, respectively a linker, comprising at least two ester bonds.

The term « polycarbonate polyol » or « polycarbonate linker » means a polyol, respectively a linker, comprising at least two carbonate bonds.

The term « polyurethane linker » means a linker comprising at least two urethane bonds.

The term « polyorganosiloxane polyol » or « polyorganosiloxane linker » means a polyol, respectively a linker, comprising at least two organosiloxane bonds. The organosiloxane may, for example be a dimethylsiloxane bond.

The term « polycaprolactone polyol » or « polycaprolactone linker » means a polyol, respectively a linker, comprising at least two units derived from the ring-opening polymerization of ε-caprolactone, in particular at least two $-[(CH_2)_5-C(=O)O]-$ units.

The term « polybutadiene polyol » or « polybutadiene linker » means a polyol, respectively a linker, comprising at least two units derived from the polymerization of butadiene, in particular at least two units selected from $-CH_2-CH=CH-CH_2-$ and $CH_2-CH(CH=CH_2)-$.

The term « isocyanurate linker » means a linker comprising an isocyanurate moiety, in particular a moiety of formula:

[Chem 5]

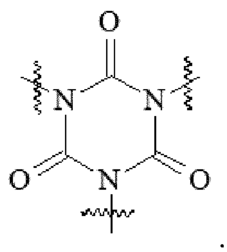

The term « hydroxyl group » means a -OH group.

The term « amino group » means a $-NR_{a1}R_{b1}$ group, wherein $R_{a1}$ and $R_{b1}$ are independently H or an optionally substituted alkyl. A « primary amino group » means a $-NR_{a1}R_{b1}$ group, wherein $R_{a1}$ and $R_{b1}$ are H. A « secondary amino group » means a $-NR_{a1}R_{b1}$ group, wherein $R_{a1}$ is H and $R_{b1}$ is an optionally substituted alkyl.

The term « carboxylic acid » means a -COOH group.

The term « isocyanate group » means a -N=C=O group.

The term « ester bond » means a -C(=O)-O- or -O-C(=O)- bond.

The term « ether bond » means a -O- bond.

The term « organosiloxane bond » means a $-Si(R_{c1})_2-O-$ bond, wherein $R_{c1}$ is an organic group, in particular an organic group selected from alkyl, alkoxy and aryl. The term « dimethylsiloxane bond » means a $-Si(CH_3)_2-O-$ bond

The term « carbonate bond » means a -O-C(=O)-O- bond.

The term « urethane or carbamate bond » means a -NH-C(=O)-O- or -O-C(=O)-NH- bond.

The term « polyisocyanate » means a compound comprising at least two isocyanate groups.

The term « optionally substituted compound, group or linker » means a compound, group or linker optionally substituted by one or more groups selected from halogen, alkyl, cycloalkyl, heterocycloalkyl, aryl, heteroaryl, alkoxy, aryloxy, aralkyl, alkaryl, aralkyloxy, alkaryloxy, haloalkyl, -OH, -SH, hydroxyalkyl, thioalkyl, thioaryl, alkylthiol, amino, alkylamino, isocyanate, nitrile, oxo (=O), -C(=O)-R', -O-C(=O)-R', -C(=O)-OR', $-C(=O)-N(R')_2$, -NR'-C(=O)-R', -C(=O)-O-C(=O)-R' and $-SO_2-N(R')_2$, each R' being independently H or an optionally substituted group selected from alkyl, aryl and alkylaryl.

Binder

The binder of the invention may comprise a mixture of at least three distinct compounds. Each compound in the mixture may bear at least two groups selected from OH, (meth)acryloyloxy and mixtures thereof. Part of the compounds in the mixture may be photoreactive, i.e. part of the compounds in the mixture may have a photoreactive linker connecting the OH and/or (meth)acryloyloxy groups to one another.

The binder of the invention may correspond to the mixture that is directly obtained after reacting at least one polyhydroxylated photoinitiator, hereinafter referred to as the "initial polyhydroxylated photoinitiator", with at least one multifunctional (meth)acrylate, hereinafter referred to as the "initial multifunctional (meth)acrylate", according to the process described hereinafter. During said reaction, diverse compounds are formed by transferring at least part of the (meth)acryloyl groups of the initial multifunctional (meth)acrylate on at least part of the OH groups of the initial polyhydroxylated photoinitiator. The binder of the invention may thus correspond to a mixture of compounds derived from the (meth)acrylation of part or all of the OH groups of the initial polyhydroxylated photoinitiator and of compounds derived by the hydrolysis of part or all of the (meth)acryloyl groups of the initial multifunctional (meth)acrylate.

The binder of the invention may be described as a composition comprising a mixture M1 of compounds of formula (1) and a mixture M2 of compounds of formula (2):

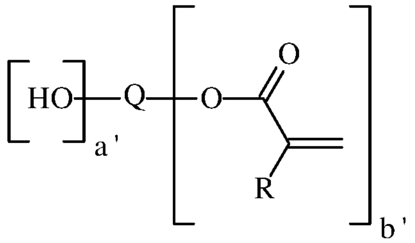 (1)

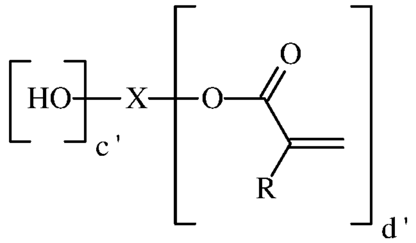 (2)

wherein

Q is a photoreactive linker;
X is a non-photoreactive linker;
each R is independently H or methyl, preferably H;
a' ranges from 0 to 8;
b' ranges from 0 to 8;
c' ranges from 0 to 16;
d' ranges from 0 to 16;
a' + b' = e';
c' + d' = f';
e' = 2 to 8; and
f' = 2 to 16;
with the proviso that the composition comprises:

- a compound 1a of formula (1) with a' is 0;
- at least one compound 1b of formula (1) with a' and b' are not 0;
- optionally a compound 1c of formula (1) with b' is 0;
- optionally a compound 2a of formula (2) with c' is 0;
- at least one compound 2b of formula (2) with c' and d' are not 0
- optionally a compound 2c of formula (2) with d' is 0.

The value e' corresponds to the total number of OH groups and (meth)acryloyloxy groups on a compound of formula (1). The value e' may be 2, 3, 4, 5, 6, 7 or 8. In particular, the value e' may be 2, 3 or 4.

The value f' corresponds to the total number of OH groups and (meth)acryloyloxy groups on a compound of formula (2). The value f' may be 2, 3, 4, 5, 6, 7, 8, 9, 10, 11, 12, 13, 14, 15 or 16. In particular, f' is at least 3, at least 4, at least 5 or at least 6.

In order to obtain a binder having a reduced amount of non-polymerizable compounds (i.e. compounds which are devoid of (meth)acryloyloxy groups), it is preferable to form the binder using an initial polyhydroxylated photoinitiator having a number of OH groups that is lower than the number of number of (meth)acryloyloxy groups in the initial multifunctional (meth)acrylate.

In a preferred embodiment, e' < f', preferably e' + 1 ≤ f', more preferably e' + 2 ≤ f'.

The compound 1a of formula (1) with a' is 0, may correspond to a fully (meth)acrylated photoinitiator. In other words, said compound 1a may be obtained by transforming all of the OH groups of the initial polyhydroxylated photoinitiator into (meth)acryloyloxy groups.

The compound(s) 1b of formula (1) with a' and b' are not 0, may correspond to a partially (meth)acrylated photoinitiator. In other words, said compound(s) 1b may be obtained by (meth)acrylating part of the OH groups of the initial polyhydroxylated photoinitiator (i.e. transforming part of the OH groups of the initial polyhydroxylated photoinitiator into (meth)acryloyloxy groups and leaving the remaining OH groups unreacted).

The optional compound 1c of formula (1) with b' is 0, may correspond to the initial polyhydroxylated photoinitiator (i.e. before reaction with the initial multifunctional (meth)acrylate).

The optional compound 2a of formula (2) with c' is 0, may correspond to a fully (meth)acrylated multifunctional (meth)acrylate. Compound 2a may correspond to the initial multifunctional (meth)acrylate (i.e. before reaction with the initial polyhydroxylated photoinitiator). If the initial multifunctional (meth)acrylate does not comprise any OH groups, compound 2a may be present in the binder. If the initial multifunctional (meth)acrylate comprises at least one OH group, compound 2a may not be present in the binder

The compound(s) 2b of formula (2) with c' and d' are not 0, may correspond to a partially hydrolyzed multifunctional (meth)acrylate (also referred to as a sub-(meth)acrylated multifunctional (meth)acrylate). In other words, said compound(s) 2b may be obtained by hydrolysis of part of the (meth)acryloyl groups of the initial multifunctional (meth)acrylate (i.e transforming part of the (meth)acryloyl groups of the initial multifunctional (meth)acrylate into OH groups and leaving the remaining (meth)acryloyloxy groups unreacted).

The optional compound 2c of formula (2) with d' is 0, may correspond to a fully hydrolyzed multifunctional (meth)acrylate (also referred to as a polyol or residue of a multifunctional (meth)acrylate). In other words, said compound 2c may be obtained by hydrolysis of all of the (meth)acryloyl groups of the initial multifunctional (meth)acrylate (i.e transforming all of the (meth)acryloyl groups of the initial multifunctional (meth)acrylate into OH groups).

The mixture M1 of the binder comprises a distribution of distinct compounds of formula (1). The compounds of formula (1) may be distinct from one another due to the values of a' and b' for each compound and/or to the position of the hydroxy and (meth)acryloyloxy on each compound. For example, if the initial polyhydroxylated photoinitiator comprises 4 OH groups, the resulting mixture may comprise up to 5 different types of compounds:

- the initial polyhydroxylated photoinitiator bearing 4 OH groups which corresponds to compound 1c,
- one or more compounds bearing 3 OH groups which correspond to compound 1b,
- one or more compounds bearing 2 OH groups which correspond to compound 1b,
- one or more compounds bearing 1 OH group which correspond to compound 1b, and
- a compound bearing no OH groups which corresponds to compound 1a.

Preferably, the amount of compound 1c in the binder is kept as low as possible so as to limit the amount of extractables in the cured product obtained with the binder of the invention.

In particular, the molar percentage of compound 1c in mixture M1 may be less than 10%, in particular less than 5%, more particularly less than 1%, based on the number of moles of compounds of formula (1) in mixture M1.

Preferably, the molar percentage of compound 1a in mixture M1 may be higher than the molar percentage of compound 1b, the molar percentages being based on the number of moles of compounds of formula (1) in mixture M1.

The mixture M2 of the binder comprises a distribution of distinct compounds of formula (2). The compounds of formula (2) may be distinct from one another due to the values of c' and d' for each compound and/or to the position of the hydroxy and (meth)acryloyloxy on each compound. For example, if the initial multifunctional (meth)acrylate comprises 4 (meth)acryloyloxy group, the resulting mixture may comprise up to 5 different types of compounds:

- the initial multifunctional (meth)acrylate bearing 4 (meth)acryloyloxy groups which corresponds to compound 2a,
- one or more compounds bearing 3 (meth)acryloyloxy group which correspond to compound 2b,
- one or more compounds bearing 2 (meth)acryloyloxy groups which correspond to compound 2b,
- one or more compounds bearing 1 (meth)acryloyloxy groups which correspond to compound 2b, and
- a compound bearing no (meth)acryloyloxy groups which corresponds to compound 2c.

Preferably, the amount of compound 2c in the binder is kept as low as possible so as to limit the amount of extractables in the cured product obtained with the binder of the invention.

In particular, the molar percentage of compound 2c in mixture M2 may be less than 10%, in particular less than 5%, more particularly less than 1%, based on the number of moles of compounds of formula (2) in mixture M2.

The compounds of formula (1) in mixture M1 comprise a photoreactive linker Q which connects the OH groups and/or the (meth)acryloyloxy groups to one another.

The photoreactive linker Q may comprise a photoinitiator moiety. In particular, the photoinitiator moiety may have Norrish type I activity or Norrish type II activity, preferably Norrish type II activity.

As used herein a "photoinitiator moiety having Norrish type I activity" is a photoinitiator moiety comprising a group capable of homolytic bond cleavage after irradiation with light thus generating a free radical species useful to initiate a polymerisation reaction. As used herein a "photoinitiator moiety having Norrish type II activity" is a photoinitiator moiety comprising a group capable of abstracting a hydrogen atom from a hydrogen donor after irradiation with light thus generating a free radical species useful to initiate a polymerisation reaction.

The photoinitiator moiety may comprise an optionally substituted aryl selected from thioxanthone, benzophenone, anthraquinone, xanthone, acridone and phenyl. In particular, the photoinitiator moiety may comprise an optionally substituted aryl selected from benzophenone, thioxanthone and phenyl. More particularly, the photoinitiator moiety may comprise an optionally substituted aryl selected from benzophenone and thioxanthone.

As used herein, the term "optionally substituted phenyl" should be understood as being distinct from an aryl comprising a benzophenone, thioxanthone, anthraquinone, xanthone or acridone moiety. Accordingly, when the photoinitiator moiety comprises an optionally substituted phenyl, the phenyl and its optional substituents do not form or are not part of a benzophenone, thioxanthone, anthraquinone, xanthone or acridone moiety. Preferably, when the photoinitiator moiety comprises an optionally substituted phenyl, at least one -C(=O)-group is directly bonded to said phenyl.

Photoinitiators having Norrish type II activity may require the presence of a hydrogen donor to generate reactive radical species after irradiation with light. The hydrogen donor may be present as a distinct compound or it may be present on the photoinitiator, i.e as a synergist moiety linked to the photoinitiator moiety.

Advantageously, the photoreactive linker Q comprises a photoinitiator moiety having Norrish type II activity and further comprises at least one synergist moiety. The synergist moiety may be a moiety having at least one hydrogen atom in alpha position to a nitrogen atom. In particular, the synergist moiety may be moiety having at least one hydrogen atom in alpha position to the nitrogen atom of a secondary amine bond, a tertiary amine bond or a substituted amide bond. As used herein, the term "secondary amine bond" means a bond of formula #-NH-# wherein the symbol # represents a point of attachment to a carbon atom. As used herein, the term "tertiary amine bond" means a bond of formula

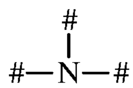

wherein the symbol # represents a point of attachment to a carbon atom. As used herein, the term "substituted amide" means a bond of formula

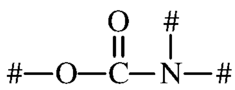

or

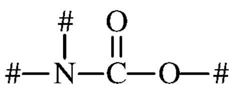

wherein the symbol # represents a point of attachment to a carbon atom.

The photoreactive linker Q may correspond to the following formula (Ia):

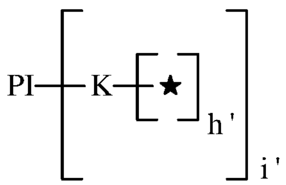

(Ia)

wherein

PI is a photoinitiator moiety;
each K is independently a linker comprising 1 to 50 carbon atoms;
each h' is independently 1, 2 or 3, in particular 2;
i' is 1, 2 or 3, in particular 1 or 2;
each symbol * represents a point of attachment to one of the hydroxy and (meth)acryloyloxy groups in formula (1) and the total number of symbols * corresponds to e' as defined in formula (1).

In the photoreactive linker of formula (Ia), each K is independently a linker comprising 1 to 50 carbon atoms. In particular, the linker comprising 1 to 50 carbon atoms further comprises one or more heteroatoms, such as O, N, S or P. In a preferred embodiment, each K comprises a nitrogen atom and optionally one or more heteroatoms selected from O and P. In a particularly preferred embodiment, each K comprises a synergist moiety as defined above and optionally one or more heteroatoms selected from O and P.

Each K may independenlty be a (h'+1)valent linker; in particular a trivalent, tetravalent or pentavalent linker.

The (h'+1)valent linker may be an optionally substituted hydrocarbon linker; in particular an optionally substituted hydrocarbon linker interrupted by one or more heteroatoms, such as O, N, S or P.

The hydrocarbon linker may be aromatic, aliphatic or cycloaliphatic; preferably aliphatic or cycloaliphatic.

The photoinitiator moiety PI may be as defined below.

In a preferred embodiment, the photoreactive linker Q may correspond to the following formula (Ib):

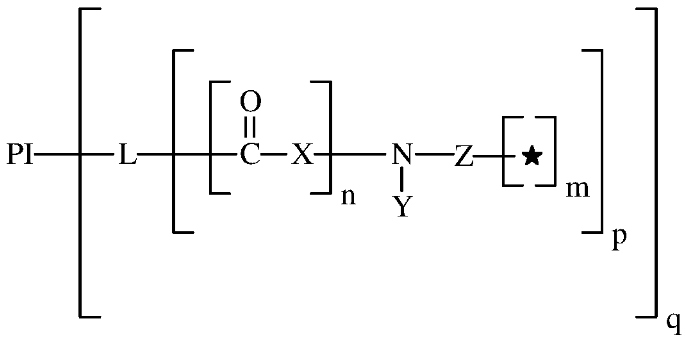

(Ib)

wherein

- PI is a photoinitiator moiety;
- each L is independently selected from a direct bond or a linker comprising 1 to 20 carbon atoms;
- each X is independently selected from a direct bond and a linker comprising 1 to 6 carbon atoms;
- each Y is independently H, alkyl or -Z'-[★]$_{m'}$;
- each Z and Z' is independently a linker comprising 1 to 6, in particular 2 to 5, more particularly 2 to 4, carbon atoms;
- each m and m' is independently 1, 2 or 3, in particular 1;
- each n is independently 0 or 1, in particular 1;
- each p is independently 1, 2 or 3; in particular 1 or 2;
- q is 1, 2 or 3, in particular 1 or 2;
- each symbol * represents a point of attachment to one of the hydroxy and (meth)acryloyloxy groups in formula (1) and the total number of symbols * corresponds to e' as defined in formula (1).

The photoreactive linkers of formula (Ia) and (Ib) bear a photoinitiator moiety PI. In one embodiment, the photoreactive linkers of formula (Ia) and (Ib) bear a single photoinitiator moiety PI.

PI may be a photoinitiator moiety comprising an optionally substituted aryl selected from benzophenone, thioxanthone, anthraquinone, xanthone, acridone and phenyl.

When PI comprises an optionally substituted phenyl, the phenyl and its optional substituents do not form or are not part of a benzophenone, thioxanthone, anthraquinone, xanthone or acridone moiety. When PI comprises an optionally substituted phenyl, at least one -C(=O)-group is directly bonded to said phenyl. When the photoreactive linker is according to formula (Ia), at least one -C(=O)- group may be present as a substituent on said phenyl group and/or at least one -C(=O)- group may be included in at least one of the -K-[★]$_{h'}$ arms borne by the phenyl group (i.e. at least one of said arms has a -C(=O)- group directly bonded to said phenyl). When the photoreactive linker is according to formula (Ib), at least one -C(=O)-group may be present as a substituent on said phenyl group and/or at least one -C(=O)- group may be included in at least one of the -L-[[C(=O)-X]$_n$-NY-Z-[★]$_m$]$_p$ arms borne by the phenyl group (i.e. at least one of said arms has a -C(=O)- group directly bonded to said phenyl).

In particular, PI may correspond to one of the following formulae (II) to (IX)

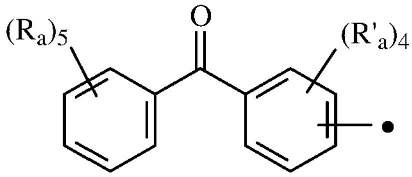
(II)

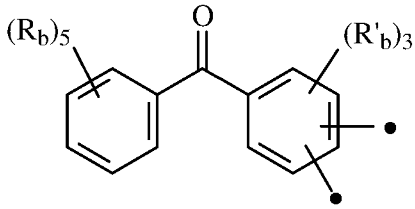
(III)

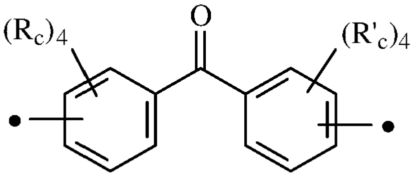
(IV)

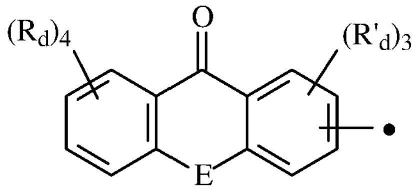
(V)

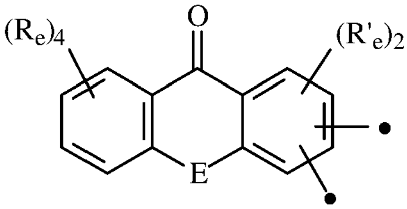
(VI)

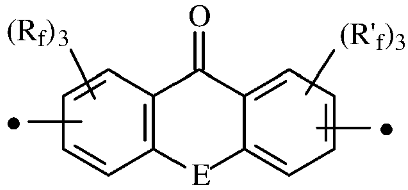
(VII)

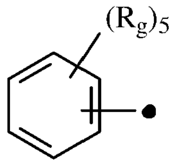
(VIII)

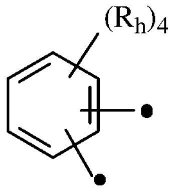
(IX)

wherein

E is S, O, C(=O) or $NR_1$, in particular S;
$R_1$ is H, an optionally substituted alkyl, an optionally substituted aryl;
each symbol ● represents a point of attachment to a linker K in formula (Ia) or to a linker L in formula (Ib);
each $R_a$, $R'_a$, $R_b$, $R'_b$, $R_c$, $R'_c$, $R_d$, $R'_d$, $R_e$, $R'_e$, $R_f$, $R'_f$, $R_g$ and $R_h$ is independently selected from H, F, Cl, Br, I, $-OR_2$, $-SR_2$, $-N(R_2)_2$, $-NO_2$, -CN, $-C(=O)R_2$, $-O-C(=O)R_2$, $-C(=O)OR_2$, $-C(=O)N(R_2)_2$, $-NR_2-C(=O)-R_2$, $-SO_2-N(R_2)_2$, or an optionally substituted group selected from alkyl, heteroatom-containing alkyl, cycloalkyl, heterocycloalkyl, alkenyl, alkynyl, aryl, aralkyl, alkaryl and heteroaryl;
two adjacent $R_a$, $R'_a$, $R_b$, $R'_b$, $R_c$, $R'_c$, $R_d$, $R'_d$, $R_e$, $R'_e$, $R\varepsilon$, $R'_f$, $R_g$ or $R_h$ groups may form, with the carbon atoms to which they are attached, a 5 to 8 membered ring;
each $R_2$ is independently H or an optionally substituted group selected from alkyl, cycloalkyl, heterocycloalkyl, alkenyl, alkynyl, aryl, aralkyl, alkaryl, heteroaryl and heteroatom-containing alkyl;
$R_3$ and $R_4$ are independently an optionally substituted group selected from aryl, alkyl, alkoxy or amino,
PI may be a photoinitiator moiety comprising an optionally substituted benzophenone. In particular, PI may be a benzophenone-containing moiety according to one of formula (II), (III) or (IV) as defined above. More particularly, PI may be a benzophenone-containing moiety according to one of formula (II), (III) or (IV) as defined above wherein $R_a$, $R'_a$, $R_b$, $R'_b$, $R_c$ and $R'_c$ are independently H or $-C(=O)R_2$.
PI may be a photoinitiator moiety comprising an optionally substituted thioxanthone. In particular, PI may be a thioxanthone-containing moiety according to one of formula (V), (VI) or (VII) as defined above wherein X = S. More particularly, PI may be a thioxanthone-containing moiety according to one of formula (V), (VI) or (VII) as defined above wherein X = S and wherein $R_e$, $R'_e$, $R_f$, $R'_f$, $R_g$ and $R'_g$ are independently H or $-C(=O)R_2$.
PI may be a photoinitiator moiety comprising an optionally substituted anthraquinone. In particular, PI may be an anthraquinone-containing moiety according to one of formula (V), (VI) or (VII) as defined above wherein X = -C(=O)-.

More particularly, PI may be an anthraquinone-containing moiety according to one of formula (V), (VI) or (VII) as defined above wherein X = -C(=O)- and wherein $R_e$, $R'_e$, $R_f$, $R'_f$, $R_g$ and $R'_g$ are independently H or - C(=O)$R_2$.
PI may be a photoinitiator moiety comprising an optionally substituted xanthone. In particular, PI may be a xanthone-containing moiety according to one of formula (V), (VI) or (VII) as defined above wherein X = O. More particularly, PI may be a xanthone-containing moiety according to one of formula (V), (VI) or (VII) as defined above wherein X = O and wherein $R_e$, $R'_e$, $R_f$, $R'_f$, $R_g$ and $R'_g$ are independently H or -C(=O)$R_2$.
PI may be a photoinitiator moiety comprising an optionally substituted acridone. In particular, PI may be an acridone-containing moiety according to one formula (V), (VI) or (VII) as defined above wherein X = $NR_1$. More particularly, PI may be an acridone-containing moiety according to one of formula (V), (VI) or (VII) as defined above wherein X = $NR_1$ and wherein $R_e$, $R'_e$, $R_f$, $R'_f$, $R_g$ and $R'_g$ are independently H or -C(=O)$R_2$.
PI may be a photoinitiator moiety comprising an optionally substituted phenyl. In particular, PI may be a phenyl-containing moiety according to one formula (VIII) or (IX) as defined above. When PI corresponds to formula (VIII) or (IX), at least one -C(=O)- group is directly bonded to the phenyl group of formula (VIII) or (IX). Said -C(=O)- may be directly bonded to the phenyl group of formula (VIII) or (IX) at a symbol ● and/or at a substituent $R_g$ or $R_h$. When the photoreactive linker is according to formula (Ia), at least one of the -K-[★]$_{h'}$ arms borne by the phenyl group may have a -C(=O)- group directly bonded to said phenyl and/or at least one of $R_g$ and $R_h$ is -C(=O)$R_2$, wherein $R_2$ is as defined above. When the photoreactive linker is according to formula (Ib), at least one of the -L-[[C(=O)-X]$_n$-NY-Z-[★]$_m$]$_p$ arms borne by the phenyl group may have L = a direct bond and n = 1 and/or at least one of $R_g$ and $R_h$ is -C(=O)$R_2$, wherein $R_2$ is as defined above.

In particular, PI may correspond to formula (VIII) or (IX) as defined above. Such linkers, may be an acetophenone-based linker. More particularly, when PI corresponds to formula (VIII) or (IX) as defined above, the photoreactive linker of formula (Ia) or (Ib) may comprise a moiety having the following formula (X) directly bonded to the phenyl group of PI:

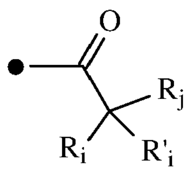

(X)

wherein

$R_i$ and $R'_i$ are alkyl or $R_i$ and $R'_i$ may, together with the carbon atom to which they are attached, form a 5 to 8 membered ring
$R_j$ is -OH or -$NR_lR'_l$;
$R_l$ and $R'_l$ are independently selected from alkyl and -Z-[★]$_m$ or $R_l$ and $R'_l$ may, together with the nitrogen atom to which they are attached, form a 5 to 8 membered ring;
each Z is independently a linker comprising 1 to 6, in particular 2 to 5, more particularly 2 to 4, carbon atoms;
the symbol ● represents a point of attachment to the phenyl group of PI;
each symbol * represents a point of attachment to one of the hydroxy and (meth)acryloyloxy groups in formula (1).

The moiety of formula (X) as defined above may be directly bonded to the phenyl group of formula (VIII) or (IX) at a symbol ● and/or at a substituent $R_g$ or $R_h$.
When a moiety of formula (X) is directly bonded to the phenyl group of formula (VIII) or (IX) at a symbol ●, then said moiety of formula (X) has $R_j$ is -$NR_lR'_l$ and at least one of $R_l$ and $R'_l$ is -Z-[★]$_m$.
When a moiety of formula (X) is directly bonded to the phenyl group of formula (VIII) or (IX) at a substituent $R_g$, then said moiety of formula (X) has $R_j$ is -OH or -$NR_lR'_l$ and $R_l$ and $R'_l$ are independently selected from alkyl or $R_l$ and $R'_l$ may, together with the nitrogen atom to which they are attached, form a 5 to 8 membered ring.
When the photoreactive linker is according to formula (Ia) and PI corresponds to formula (VIII) or (IX) as defined above, at least one of the -K-[★]$_{h'}$ arms borne by the phenyl group may be a moiety of formula (X) and/or at least one of $R_g$ and $R_h$ is a moiety of formula (X).
When the photoreactive linker is according to formula (Ib) and PI corresponds to formula (VIII) or (IX) as defined above, at least one of the -L-[[C(=O)-X]$_n$-NY-Z-[★]$_m$]$_p$ arms borne by the phenyl moiety may be a moiety of formula (X) [i.e. L = a direct bond, n = 1 and X = -$CR_iR'_i$-] and/or at least one of $R_g$ and $R_h$ is a moiety of formula (X).
In a preferred embodiment, the photoreactive linker of formula (Ib) according to the invention may be according to one of formulae (XII) to (XXI):

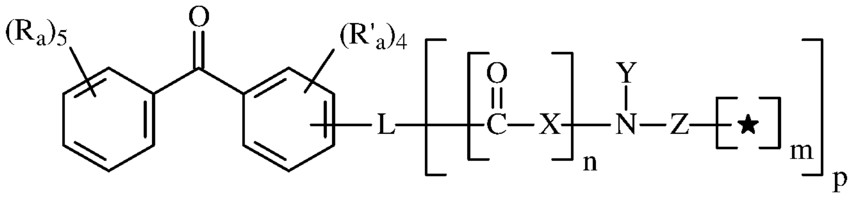

(XII)

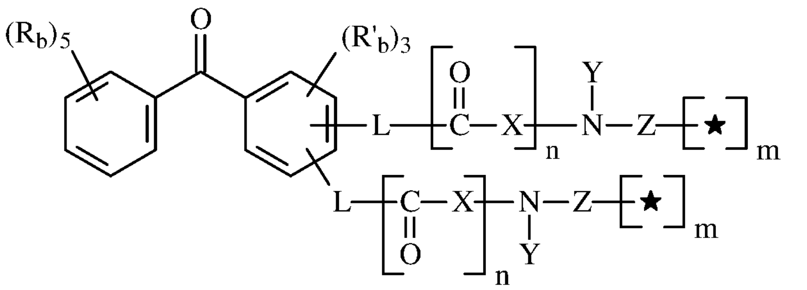

(XIII)

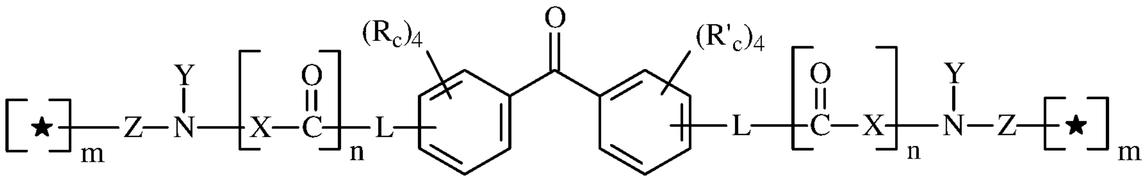

(XIV)

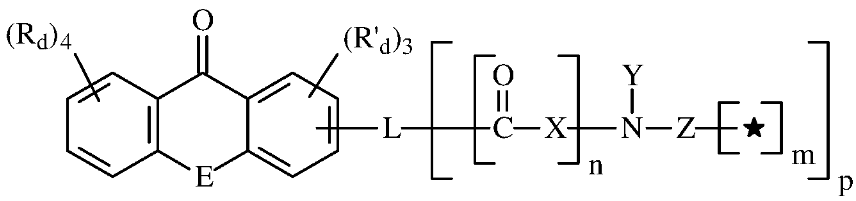

(XV)

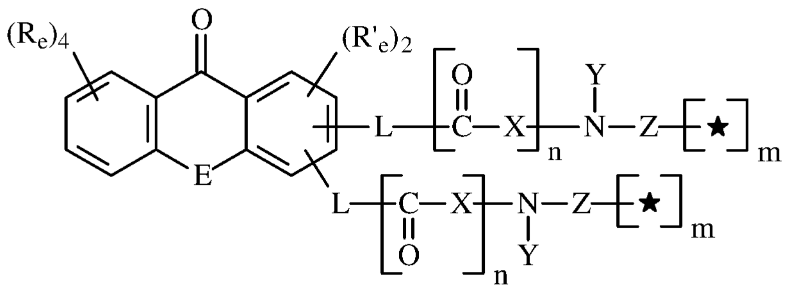

(XVI)

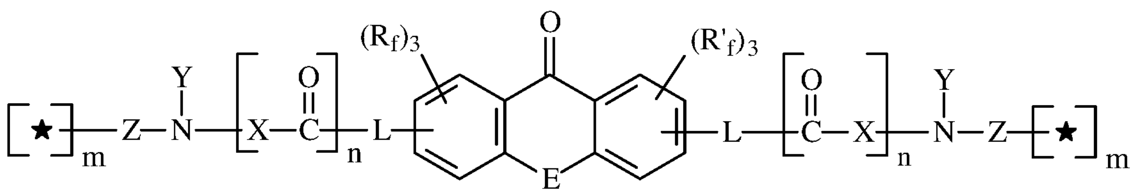

(XVII)

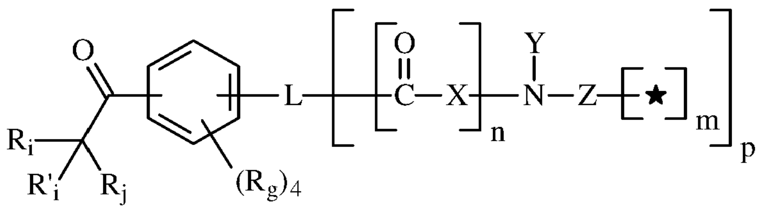

(XVIII)

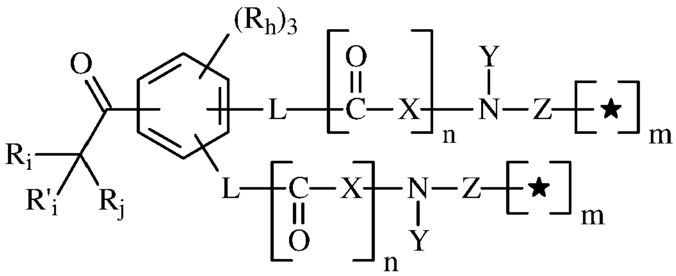

(XIX)

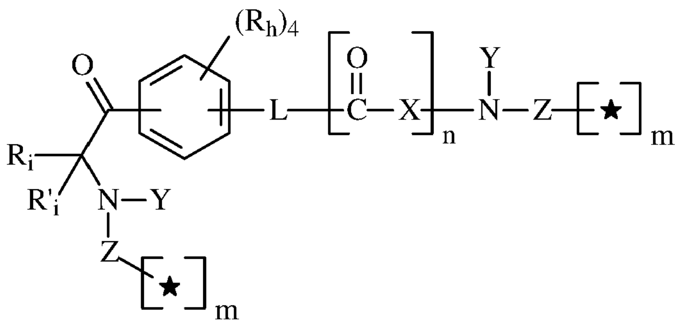

(XX)

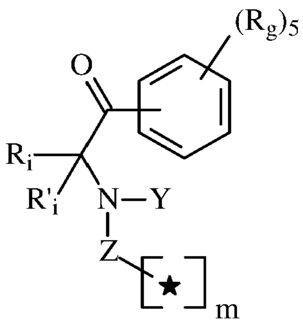

(XXI)

wherein

L, X, Y, Z, m and n are as defined above for the photoreactive linker of formula (Ia);
$R_a$, $R'_a$, $R_b$, $R'_b$, $R_c$, $R'_c$, $R_d$, $R'_d$, $R_e$, $R'_e$, $R_f$, $R'_f$, $R_g$ and $R_h$ are as defined above for the PI moieties of formula (II) to (IX);
$R_i$ and $R'_i$ are as defined above for the moiety of formula (X);
$R_j$ is -OH or -$NR_lR'_l$;
$R_l$ and $R'_l$ are independently selected from alkyl or $R_l$ and $R'_l$ may, together with the nitrogen atom to which they are attached, form a 5 to 8 membered ring;
p is 1 or 2;
each symbol * represents a point of attachment to one of the hydroxy and (meth)acryloyloxy groups in formula (1).

The photoreactive linker of formula (Ib) may be a benzophenone-based linker, in other words a linker comprising an optionally substituted benzophenone moiety. In particular, the photoreactive linker of formula (Ib) may be a benzophenone-based linker according to one of formula (XII), (XIII) or (XIV) as defined above.

In one embodiment, the photoreactive linker of formula (Ib) may be a benzophenone-based linker according to formula (XII) wherein:

L is a trivalent alkylene;
n is 1;
X is a direct bond;
Y is -Z'-[★]$_{m'}$;
Z and Z' are independently an alkylene;
m and m' are 1;
p is 1 or 2;
each $R_a$ and $R'_a$ is independently as defined above for the PI moiety of formula (II), preferably $R_a$ and $R'_a$ are independently H or -C(=O)$R_2$;
each symbol * represents a point of attachment to one of the hydroxy and (meth)acryloyloxy groups in formula (1).

In another embodiment, the photoreactive linker of formula (Ib) may be a benzophenone-based linker according to formula (XIII) or (XIV) wherein:

each L is independently a direct bond or an oxyalkylene, preferably at least one of L is an oxyalkylene and the other L is a direct bond or an oxyalkylene;
n is 1;
X is a direct bond;
Y is -Z'-[★]$_{m'}$;
Z and Z' are independently an alkylene;
m and m' are 1;
each $R_b$, $R'_b$, $R_c$ and $R'_c$ is independently as defined above for the PI moiety of formula (III) or (IV), preferably $R_b$ $R'_b$, $R_c$ and $R'_c$ are independently H or -C(=O)$R_2$;
each symbol * represents a point of attachment to one of the hydroxy and (meth)acryloyloxy groups in formula (1).

The photoreactive linker of formula (Ib) may be a thioxanthone-based linker, in other words a linker comprising an optionally substituted thioxanthone moiety. In particular, the photoreactive linker of formula (Ib) may be a thioxanthone-based linker according to one of formula (XV), (XVI) or (XVII) as defined above, wherein E is S.

In one embodiment, the photoreactive linker of formula (Ib) may be a thioxanthone-based linker according to formula (XV) wherein:

E is S;
L is a trivalent alkylene;
n is 1;
X is a direct bond;
Y is -Z'-[★]$_{m'}$;
Z and Z' are independently an alkylene;
m and m' are 1;
p is 1 or 2;
each $R_d$ and $R'_d$ is independently as defined above for the PI moiety of formula (V), preferably $R_d$ and $R'_d$ are independently H or -C(=O)$R_2$;
each symbol * represents a point of attachment to one of the hydroxy and (meth)acryloyloxy groups in formula (1).

In another embodiment, the photoreactive linker of formula (Ib) may be a thioxanthone-based linker according to formula (XVI) or (XVII) wherein:

E is S;
each L is independently a direct bond or an oxyalkylene, preferably at least one of L is an oxyalkylene and the other L is a direct bond or an oxyalkylene;
n is 1;
X is a direct bond;
Y is -Z'-[★]$_{m'}$;
Z and Z' are independently an alkylene;
m and m' are 1;
each $R_e$, $R'_e$, Rε and R'ε is independently as defined above for the PI moiety of formula (VI) or (VII), preferably $R_e$,

$R'_e$, $R\varepsilon$ and $R'\varepsilon$ are independently H or $-C(=O)R_2$;
each symbol * represents a point of attachment to one of the hydroxy and (meth)acryloyloxy groups in formula (1).

The photoreactive linker of formula (Ib) may be an anthraquinone-based linker, in other words a linker comprising an optionally substituted anthraquinone moiety. In particular, the photoreactive linker of formula (Ib) may be an anthraquinone-based linker according to one of formula (XV), (XVI) or (XVII) as defined above, wherein E is -C(=O)-.

In one embodiment, the photoreactive linker of formula (Ib) may be an anthraquinone-based linker according to formula (XV) wherein:

E is -C(=O)-;
L is a trivalent alkylene;
n is 1;
X is a direct bond;
Y is $-Z'-[\star]_{m'}$;
Z and Z' are independently an alkylene;
m and m' are 1;
p is 1 or 2;
each $R_d$ and $R'_d$ is independently as defined above for the PI moiety of formula (V), preferably $R_d$ and $R'_d$ are independently H or $-C(=O)R_2$;
each symbol * represents a point of attachment to one of the hydroxy and (meth)acryloyloxy groups in formula (1).

In another embodiment, the photoreactive linker of formula (Ib) may be an anthraquinone - based linker according to formula (XVI) or (XVII) wherein:

E is -C(=O)-;
each L is independently a direct bond or an oxyalkylene, preferably at least one of L is an oxyalkylene and the other L is a direct bond or an oxyalkylene;
n is 1;
X is a direct bond;
Y is $-Z'-[\star]_{m'}$;
Z and Z' are independently an alkylene;
m and m' are 1;
each $R_e$, $R'_e$, $R\varepsilon$ and $R'\varepsilon$ is independently as defined above for the PI moiety of formula (VI) or (VII), preferably $R_e$, $R'_e$, $R\varepsilon$ and $R'\varepsilon$ are independently H or $-C(=O)R_2$;
each symbol * represents a point of attachment to one of the hydroxy and (meth)acryloyloxy groups in formula (1).

The photoreactive linker of formula (Ib) may be a xanthone-based linker, in other words a linker comprising an optionally substituted xanthone moiety. In particular, the photoreactive linker of formula (Ib) may be a xanthone-based linker according to one of formula (XV), (XVI) or (XVII) as defined above, wherein E is O.

In one embodiment, the photoreactive linker of formula (Ib) may be a xanthone-based linker according to formula (XV) wherein:

E is O;
L is a trivalent alkylene;
n is 1;
X is a direct bond;
Y is $-Z'-[\star]_{m'}$;
Z and Z' are independently an alkylene;
m and m' are 1;
p is 1 or 2;
each $R_d$ and $R'_d$ is independently as defined above for the PI moiety of formula (V), preferably $R_d$ and $R'_d$ are independently H or $-C(=O)R_2$;
each symbol * represents a point of attachment to one of the hydroxy and (meth)acryloyloxy groups in formula (1).

In another embodiment, the photoreactive linker of formula (Ib) may be a xanthone-based linker according to formula (XVI) or (XVII) wherein:

E is O;

each L is independently a direct bond or an oxyalkylene, preferably at least one of L is an oxyalkylene and the other L is a direct bond or an oxyalkylene;
n is 1;
X is a direct bond;
Y is -Z'-[★]$_{m'}$;
Z and Z' are independently an alkylene;
m and m' are 1;
each $R_e$, $R'_e$, Rε and R'ε is independently as defined above for the PI moiety of formula (VI) or (VII), preferably $R_e$, $R'_e$, Rε and R'ε are independently H or -C(=O)$R_2$;
each symbol * represents a point of attachment to one of the hydroxy and (meth)acryloyloxy groups in formula (1).

The photoreactive linker of formula (Ib) may be an acridone-based linker, in other words a linker comprising an optionally substituted acridone moiety. In particular, the photoreactive linker of formula (Ib) may be an acridone-based linker according to one of formula (XV), (XVI) or (XVII) as defined above, wherein E is $NR_1$.

In one embodiment, the photoreactive linker of formula (Ib) may be an acridone-based linker according to formula (XV) wherein:

E is $NR_1$;
L is a trivalent alkylene;
n is 1;
X is a direct bond;
Y is -Z'-[★]$_{m'}$;
Z and Z' are independently an alkylene;
m and m' are 1;
p is 1 or 2;
each $R_d$ and $R'_d$ is independently as defined above for the PI moiety of formula (V), preferably $R_d$ and $R'_d$ are independently H or -C(=O)$R_2$;
each symbol * represents a point of attachment to one of the hydroxy and (meth)acryloyloxy groups in formula (1).

In another embodiment, the photoreactive linker of formula (Ib) may be an acridone-based linker according to formula (XVI) or (XVII) wherein:

E is $NR_1$;
each L is independently a direct bond or an oxyalkylene, preferably at least one of L is an oxyalkylene and the other L is a direct bond or an oxyalkylene;
n is 1;
X is a direct bond;
Y is -Z'-[★]$_{m'}$;
Z and Z' are independently an alkylene;
m and m' are 1;
each $R_e$, $R'_e$, Rε and R'ε is independently as defined above for the PI moiety of formula (VI) or (VII), preferably $R_e$, $R'_e$, Rε and R'ε are independently H or -C(=O)$R_2$;
each symbol * represents a point of attachment to one of the hydroxy and (meth)acryloyloxy groups in formula (1).

The photoreactive linker of formula (Ib) may be an acetophenone-based linker, in other words a linker comprising a *-C(=O)-Ph moiety wherein Ph is an optionally substituted phenyl and the symbol * represents a point of attachment to a carbon atom. In particular, the photoreactive linker of formula (Ib) may be an acetophenone-based linker according to one of formula (XVIII), (XIX) or (XX) as defined above.

In one embodiment, the photoreactive linker of formula (Ib) may be an acetophenone-based linker according to formula (XVIII) wherein:

L is a trivalent alkylene;
n is 1;
X is a direct bond;
Y is -Z'-[★]$_{m'}$;
Z and Z' are independently alkylene;
m and m' are 1;
p is 1 or 2;

$R_i$ and $R'_i$ are independently an alkyl or $R_i$ and $R'_i$ form a ring;
$R_j$ is -OH or -$NR_lR'_l$;
$R_l$ and $R'_l$ are independently an alkyl or $R_l$ and $R'_l$ form a ring;
each $R_g$ is independently as defined above for the PI moiety of formula (VIII), preferably each $R_g$ is H;
each symbol * represents a point of attachment to one of the hydroxy and (meth)acryloyloxy groups in formula (1).

In another embodiment, the photoreactive linker of formula (Ib) may be an acetophenone-based linker according to formula (XIX) wherein:

each L is independently an oxyalkylene;
n is 1;
X is a direct bond;
Y is -Z'-[★]$_{m'}$;
Z and Z' are independently alkylene;
m and m' are 1;
$R_i$ and $R'_i$ are independently an alkyl or $R_i$ and $R'_i$ form a ring;
$R_j$ is -OH or -$NR_lR'_l$;
$R_l$ and $R'_l$ are independently an alkyl or $R_l$ and $R'_l$ form a ring;
each $R_h$ is independently as defined above for the PI moiety of formula (IX), preferably each $R_h$ is H;
each symbol * represents a point of attachment to one of the hydroxy and (meth)acryloyloxy groups in formula (1).

In yet another embodiment, the photoreactive linker of formula (Ib) may be an acetophenone-based linker according to formula (XX) wherein:

L is an oxyalkylene;
n is 1;
X is a direct bond;
Y is -Z'-[★]$_{m'}$;
Z and Z' are independently alkylene;
m and m' are 1;
$R_i$ and $R'_i$ are independently an alkyl;
each $R_h$ is independently as defined above for the PI moiety of formula (IX), preferably each $R_h$ is H;
each symbol * represents a point of attachment to one of the hydroxy and (meth)acryloyloxy groups in formula (1).

In yet another embodiment, the photoreactive linker of formula (Ib) may be an acetophenone-based linker according to formula (XXI) wherein:

Y is -Z'-[★]$_{m'}$;
Z and Z' are independently an alkylene;
m and m' are 1;
$R_i$ and $R'_i$ are independently an alkyl;
each $R_g$ is independently as defined above for the PI moiety of formula (VIII), preferably each $R_g$ is H;
each symbol * represents a point of attachment to one of the hydroxy and (meth)acryloyloxy groups in formula (1).

In the photoreactive linkers of formula (Ib) and (XII) to (XXI), each L is independently selected from a direct bond or a linker comprising 1 to 20 carbon atoms. In particular, the linker comprising 1 to 20 carbon atoms may further optionally comprise one or more heteroatoms, such as O or S. More particularly, the linker comprising 1 to 20 carbon atoms may be:

- an acyclic linker which may be saturated or unsaturated, in particular an acyclic linker having from 1 to 6, from 1 to 4 or from 1 to 2 carbon atoms; or
- a cyclic linker which may be aromatic or non-aromatic, monocyclic or polycyclic, in particular a cyclic linker having from 6 to 20, from 7 to 15 or from 7 to 13 carbon atoms.

In a preferred embodiment, each L is independently selected from direct bond, C1-C6 alkylene, C1-C6 oxyalkylene, C1-C6 alkenylene, C1-C6 thioalkylene, C1-C6 ketoalkylene, C1-C6 ketoalkenylene, C7-C13 ketoarylene, C6-C13 ketocycloalkylene;

more particularly each L is independently selected from a direct bond, an alkylene of formula (XXVI) or (XXVII), an oxyalkylene of formula (XXVIII), a thioalkylene of formula (XXIX), a ketoalkylene of formula (XXX), a ketoalkenylene of formula (XXXI), a ketoarylene of formula (XXXII), a ketocycloalkylene of formula (XXXIII)

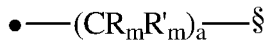
(XXVI)

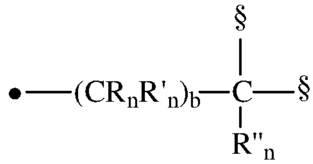
(XXVII)

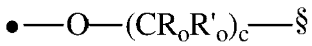
(XXVIII)

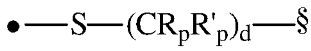
(XXIX)

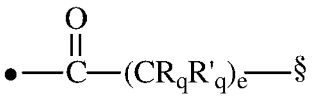
(XXX)

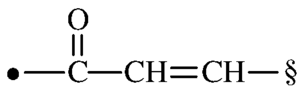
(XXXI)

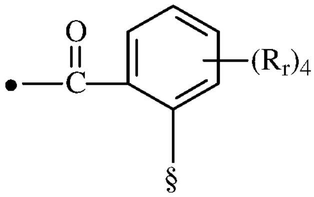
(XXXII)

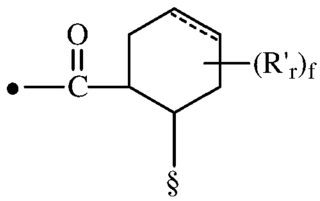
(XXXIII)

wherein
each $R_m$, $R'_m$, $R_n$, $R'_n$, $R''_n$, $R_o$, $R'_o$, $R_p$, $R'_p$, $R_q$ and $R'_q$ is independently H or alkyl, in particular H;
each $R_r$ and $R'_r$ is independently selected from H, F, Cl, Br, I, $-OR_2$, $-SR_2$, $-N(R_2)_2$, $-NO_2$, -CN, $-C(=O)R_2$, $-O-C(=O)R_2$, $-C(=O)OR_2$, $-C(=O)N(R_2)_2$, $-NR_2-C(=O)-R_2$, $-SO_2-N(R_2)_2$, or an optionally substituted group selected from alkyl, heteroatom-containing alkyl, cycloalkyl, heterocycloalkyl, alkenyl, alkynyl, aryl, aralkyl, alkaryl and heteroaryl;
two adjacent $R_r$ or $R'_r$ groups may form, with the carbon atoms to which they are attached, a 5 to 8 membered ring;
each $R_2$ is independently H or an optionally substituted group selected from alkyl, cycloalkyl, heterocycloalkyl, alkenyl, alkynyl, aryl, aralkyl, alkaryl, heteroaryl and heteroatom-containing alkyl;
$R_3$ and $R_4$ are independently an optionally substituted group selected from aryl, alkyl, alkoxy or amino
a is 1, 2, 3, 4, 5 or 6, in particular 1 or 2;
b is 1, 2, 3, 4 or 5, in particular 1;
c is 1, 2, 3, 4, 5 or 6, in particular 1 or 2;
d is 1, 2, 3, 4, 5 or 6, in particular 1 or 2;
e is 1, 2, 3, 4 or 5, in particular 1;
f is 6 or 8;
the partially hashed bond ----- represents either a single C-C bond or a double C=C bond; the symbol ● represents a point of attachment to the PI moiety;
the symbol § represents a point of attachment to a -C(=O)-X-N(Y)-Z-[★]$_m$ moiety each symbol * represents a point of attachment to one of the hydroxy and (meth)acryloyloxy groups in formula (1).

When L is a direct bond, n is preferably 1.

In the photoreactive linkers of formula (Ib) and (XII) to (XXI), when n is 1, each X is independently selected from a direct bond and a linker comprising 1 to 6, in particular 1 to 4, more particularly 1 to 3, carbon atoms. In particular, the linker comprising 1 to 6 carbon atoms may be an acyclic linker which may be saturated or unsaturated, preferably saturated.

In a preferred embodiment, each X is independently selected from direct bond and C1-C6 alkylene;

in particular each X is independently selected from a direct bond and an alkylene of formula $-(CR_sR'_s)_g-$;
wherein each $R_s$ and $R'_s$ is independently H or alkyl, in particular alkyl;
g is 1, 2, 3, 4, 5 or 6, in particular 1.

In one embodiment, when X is a direct bond then L is a direct bond. In an alternative embodiment, when X is a direct bond then L is not a direct bond.

The compound of formula (I) may comprise at least two -N(Y)-Z-[★]$_m$ moieties where Y is other than H, preferably at least two -N(Y)-Z-[★]$_m$ moieties where Y is -Z'-[★]$_{m'}$. When the compound of formula (I) comprises at least two -N(Y)-Z-[★]$_m$ moieties where Y is -Z'-[★]$_{m'}$, then m may be 1. When the compound of formula (I) comprises at least two -N(Y)-Z-[★]$_m$ moieties where Y is alkyl, then m may be 2 or 3, in particular 3.

In the photoreactive linkers of formula (Ib) and (XII) to (XXI), each Y is independently H, alkyl or -Z'-[★]$_{m'}$. Z' and m' are as defined below and each symbol * represents a point of attachment to one of the hydroxy and (meth)acryloyloxy groups in formula (1).

In a preferred embodiment, each Y is independently alkyl or -Z'-[★]$_{m'}$, in particular methyl, ethyl or -Z'-[★]$_{m'}$, more particularly -Z'-[★]$_{m'}$. All of the Y groups may be -Z'-[★]$_{m'}$. Alternatively, all of the Y groups may be alkyl. Alternatively part of the Y groups may be -Z'-[★]$_{m'}$ and part of the Y groups may be alkyl.

When Y is H, at least one of m, p or q is preferably 2 or 3.

When Y is alkyl, at least one of m, p or q is preferably 2 or 3.

In the photoreactive linkers of formula (Ib) and (XII) to (XXI), each Z and Z' is independently a linker comprising 1 to 6, in particular 2 to 5, more particularly 2 to 4, carbon atoms. In particular, the linker comprising 1 to 6 carbon atoms may be an acyclic linker which may be saturated or unsaturated, preferably saturated.

In a preferred embodiment, each Z and Z' is independently an alkylene; in particular each Z and Z' is independently an alkylene of formula (XXXIV), (XXXV) or (XXXVI), even more particularly an alkylene of formula (XXXIV)

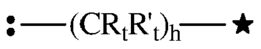

(XXXIV)

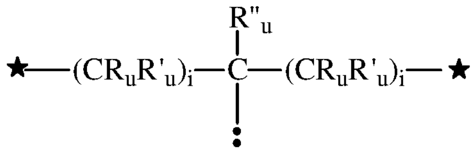

(XXXV)

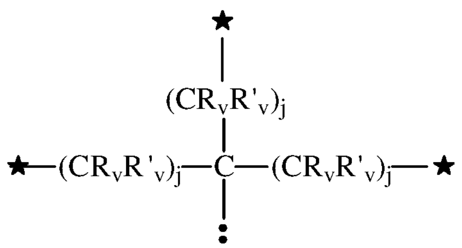

(XXXVI)

wherein each Rt, R't, $R_u$, $R'_u$, $R_v$, $R'_v$ is independently H or alkyl, in particular H;

$R''_u$ is H or alkyl, in particular alkyl;

h is 1, 2, 3, 4, 5 or 6, in particular 2;

each i is independently 1, 2 or 3, in particular 1;

each j is independently 1, 2 or 3, in particular 1;

the symbol : represents a point of attachment to the nitrogen atom;

each symbol * represents a point of attachment to one of the hydroxy and (meth)acryloyloxy groups in formula (1).

The compounds of formula (2) in mixture M2 comprise a non-photoreactive linker X which connects the OH groups and/or the (meth)acryloyloxy groups to one another.

Compound 2a corresponds to a compound comprising (meth)acryloyloxy groups and no hydroxy groups (c' is 0). Compound 2a may correspond to the initial multifunctional (meth)acrylate (i.e. before reaction with the polyhydroxylated photoinitiator).

Preferably, compound 2a has a number average molecular weight of 150 to 10,000 g/mol, in particular 200 to 6,000 g/mol, more particularly 300 to 5,000 g/mol.

X may be a (c'+d')valent non-photoreactive linker. In particular, X may be a divalent, trivalent, tetravalent, pentavalent, hexavalent, heptavalent, nonavalent or decavalent non-photoreactive linker.

X may be an aromatic, aliphatic or cycloaliphatic hydrocarbon linker, an isocyanurate linker, a polyether linker, a polyamine linker, a polysulfide linker, a polyester linker, a polycarbonate linker, a polycaprolactone linker, a polyurethane linker, a polyorganosiloxane linker, a polybutadiene linker, and combinations thereof. In particular, X may be selected

from an aromatic, aliphatic or cycloaliphatic hydrocarbon linker, a polyether linker, a polyester linker and combinations thereof.

X may be the residue of a non-photoreactive polyol $P_{OH}$ without the OH groups. Examples of suitable polyols $P_{OH}$ include ethylene glycol, 1,2- or 1,3-propylene glycol, 1,2-, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, cyclohexane-1,4-dimethanol, norbornene dimethanol, norbornane dimethanol, tricyclodecanediol, tricyclodecane dimethanol, bisphenol A, B, F or S, hydrogenated bisphenol A, B, For S, trimethylolmethane, trimethylolethane, trimethylolpropane, di(trimethylolpropane), triethylolpropane, pentaerythritol, di(pentaerythritol), glycerol, di-, tri- or tetraglycerol, polyglycerol, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), a sugar alcohol, a dianhydrohexitol (i.e. isosorbide, isomannide, isoidide), tris(2-hydroxyethyl)isocyanurate, a polybutadiene polyol, a polyester polyol, a polyether polyol, a polyorganosiloxane polyol, a polycarbonate polyol as well as the alkoxylated (e.g., ethoxylated and/or propoxylated) derivatives thereof and the derivatives obtained by ring-opening polymerization of ε-caprolactone initiated with one of the aforementioned polyols.

In particular, X may be the residue of a non-photoreactive polyol selected from di(pentaerythritol), an alkoxylated di(pentaerythritol), pentaerythritol, an alkoxylated pentaerythritol, di(trimethylolpropane), an alkoxylated di(trimethylolpropane), trimethylolpropane, an alkoxylated trimethylolpropane, glycerol, an alkoxylated glycerol, di-, tri- or tetraglycerol, an alkoxylated di-, tri- or tetraglycerol, polyglycerol, an alkoxylated polyglycerol, sorbitol, an alkoxylated sorbitol, a hyperbranched polyester polyol and combinations thereof.

In one embodiment, X may be a divalent linker selected from one of formula (D1)-(D5):

$$-(CR^1R^2)_{a''}- \quad (D1)$$

$$-[(CR^3R^4)_{j'}-O]_k-(CR^3R^4)_{j'}- \quad (D2)$$

$$-[(CR^5R^6)_{j''}-O]_{k'}-(CR^7R^8)_{a*}-[O-(CR^5R^6)_{j*}]_{k''}- \quad (D3)$$

$$-[(CR^9R^{10})_l-N(R^{11})]_\mu-(CR^9R^{10})_l- \quad (D4)$$

$$-[(CR^{12}R^{13})_{l'}-C(=O)O]_{\mu'}-[(CR^3R^4)_{j'}-O]_{k*}-(CR^3R^4)_{j'}-[OC(=O)-(CR^{12}R^{13})_{l''}]_{\mu''}- \quad (D5);$$

$R^1$, $R^2$, $R^3$, $R^4$, $R^5$, $R^6$, $R^7$, $R^8$, $R^9$ ,$R^{10}$, $R^{11}$, $R^{12}$ and $R^{13}$ are independently H or alkyl, in particular H, methyl or ethyl;
a" and a* are independently 2 to 20;
j', j ", j * and 1 are independently 2 to 4;
k and μ are independently 1 to 20 ;
k' and k" are independently 0 to 20 with the proviso that at least one of k' and k" is not 0;
k* is 0 to 20;
l' and l" are independently 3 to 12;
μ' and μ" are independently 0 to 20 with the proviso that at least one of μ' and μ" is not 0.

In particular, X may be a divalent linker selected from an alkylene such as ethylene, 1,2- or 1,3-propanediyl, 1,2-, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated (in particular an ethoxylated and/or propoxylated) derivative of the aforementioned alkylenes; an esterified (in particular by ring-opening polymerization of a lactone such as ε-caprolactone) derivative of the aforementioned alkylenes; a residue of a di-, tri-, tetra- or polyoxyalkene without the OH groups such as di-, tri- or tetraethylene glycol, di-, tri- or tetrapropylene glycol, di-, tri- or tetrabutylene glycol, polyethylene glycol, polypropylene glycol, polytetramethylene glycol and poly(ethylene glycol-co-propylene glycol).

In one embodiment, X may be a trivalent linker corresponding to formula (D6), a tetravalent linker corresponding to formula (D7) or (D8) or an hexavalent linker corresponding to formula (D9):

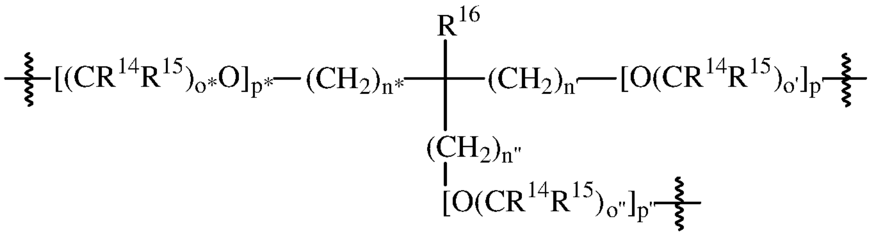

(D6)

wherein

$R^{14}$ and $R^{15}$ are independently H or methyl;
$R^{16}$ is selected from H, alkyl and alkoxy, in particular $R^{16}$ is alkyl;
n', n" and n* are independently 0 to 2 with the proviso that at least 2 among n', n" and n* are not 0, in particular n', n" and n* are all 1 or n' is 0 and n" and n* are 1;
o', o" and o* are independently 2 to 4, in particular 2;
p', p" and p* are independently 0 to 10, in particular 0 to 6;

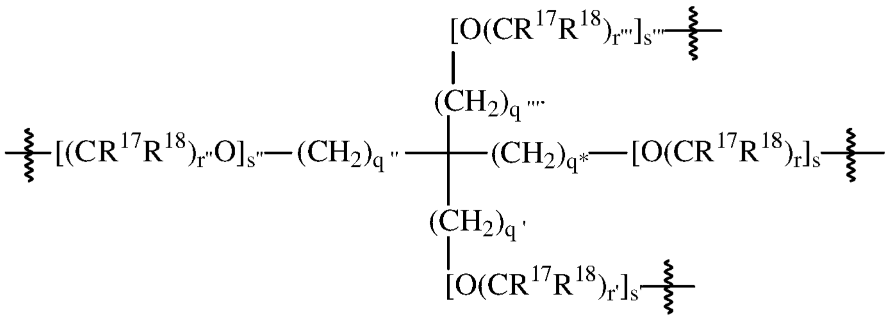

(D7)

wherein
$R^{17}$ and $R^{18}$ are independently H or methyl;
q*, q', q" and q‴ are independently 0 to 2 with the proviso that at least 3 among q*, q', q" and q‴ are not 0, in particular q*, q', q" and q‴ are all 1,
r, r', r" and r‴ are independently 2 to 4, in particular 2;
s, s', s" and s‴ are independently 0 to 10, in particular 1 to 6;

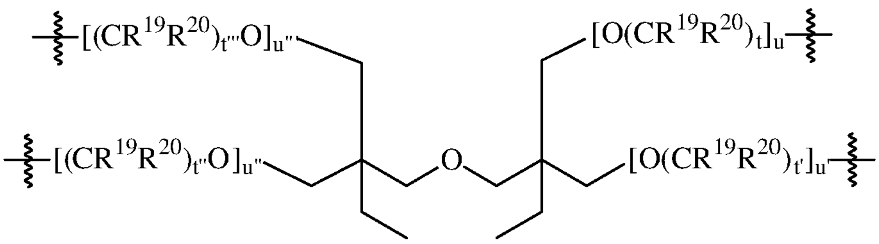

(D8)

wherein
$R^{19}$ and $R^{20}$ are independently H or methyl;
t, t', t" and t‴ are independently 2 to 4, in particular 2;
u, u', u" and u‴ are independently 0 to 10, in particular 1 to 6;

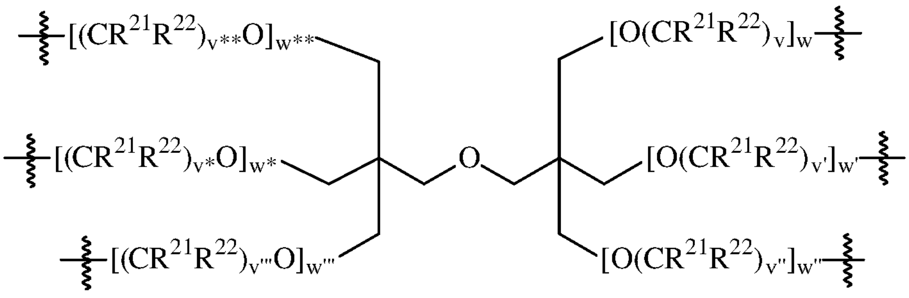

(D9)

$R^{21}$ and $R^{22}$ are independently H or methyl;
v, v', v", v‴, v* and v** are independently 2 to 4, in particular 2;
w, w', w", w"', w* and w** are independently 0 to 10, in particular 1 to 6.

The binder of the invention may advantageously be liquid at 20°C. The compound of formula (I) may have a viscosity 25°C of less than 10 Pa.s, in particular less than 5 Pa.s, more particularly less than 1 Pa.s. Advantageously, the viscosity of the binder of the invention may be substantially the same as the viscosity of the mixture of components used to form the binder (i.e. prior to the transesterification reaction). In other words, the viscosity of the binder may be substantially the same as the viscosity of a mixture comprising a compound of formula (1) with b' = 0 and a compound of formula (2) with c' = 0. As used herein, a viscosity of mixture that is substantially the same as the viscosity of another mixture means that the difference in viscosity between both mixtures may be less than ± 30%, less than ± 20%, less than ± 10% or less than ± 5%.

Advantageously, the binder of the invention may be directly mixed with one or more substances conventionally used in polymerizable compositions, in particular in a non-reactive solvent, a (meth)acrylate monomer, a (meth)acrylate oligomer and mixtures thereof. Such substances are described in detail hereinafter.

Preparation process of the binder

The binder of the invention may be prepared with a process comprising reacting at least one polyhydroxylated photoinitiator of formula (3) with at least one a multifunctional (meth)acrylate of formula (4), optionally in the presence of a transesterification catalyst, in order to transfer at least part of the (meth)acryloyl groups of the multifunctional (meth)acrylate of formula (4) on at least part of the hydroxy groups of the polyhydroxylated photoinitiator of formula (3):

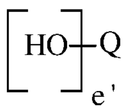

(3)

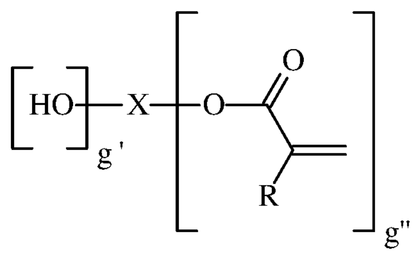

(4)

wherein

Q is a photoreactive linker, in particular Q is the residue of a polyhydroxylated photoinitiator;
X is a non-photoreactive linker, in particular X is the residue of a multifunctional (meth)acrylate;
each R is independently H or methyl;
e' = 2 to 8;
g' = 0 to 2;
g" = 2 to 16
g' + g" = f' and
f' = 2 to 16.

In particular, Q, X, R, e' and f' may be as defined above for the binder of the invention.

In a particularly preferred embodiment, the compound of formula (3) is a polyhydroxylated photoinitiator selected from one of the following compounds:

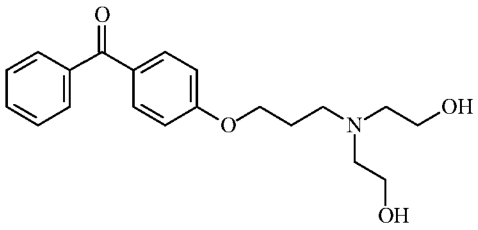

(Bz2OH)

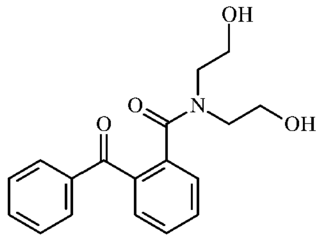

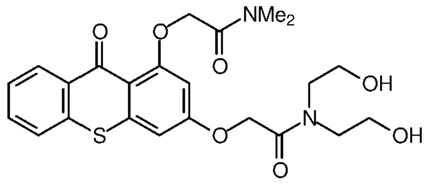

(Tx2OH)

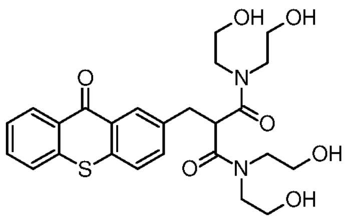

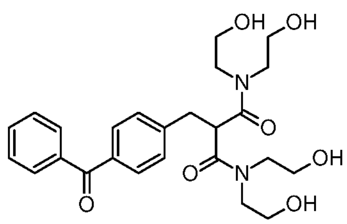

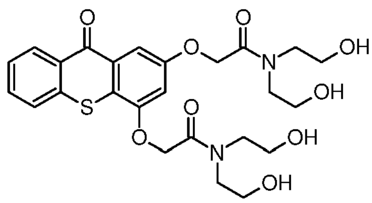

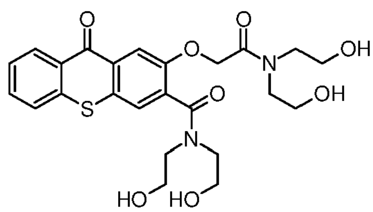

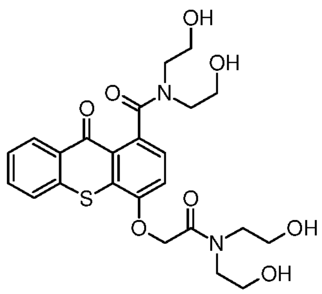

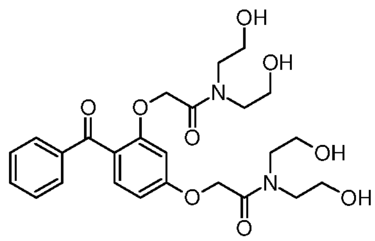

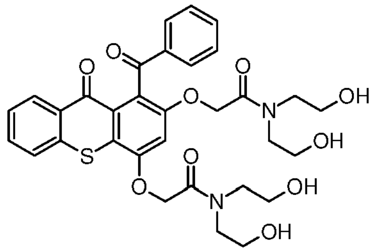

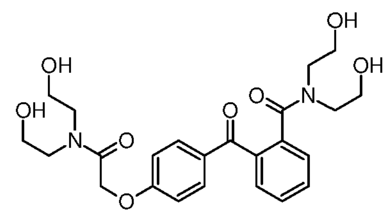

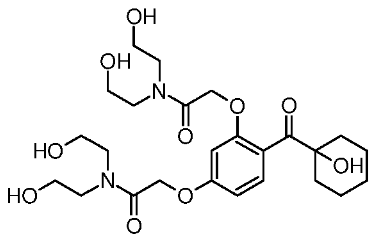

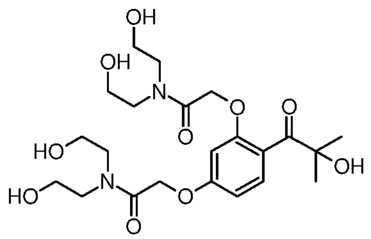

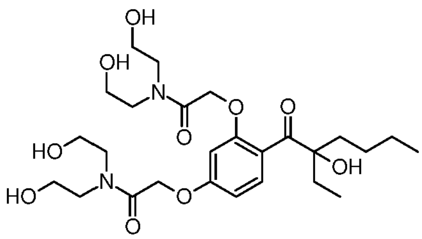

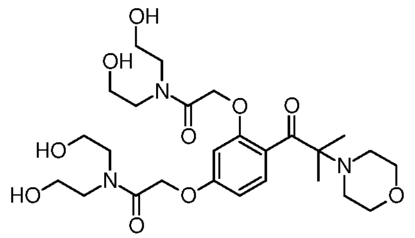

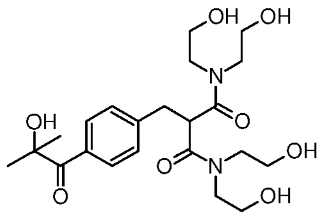

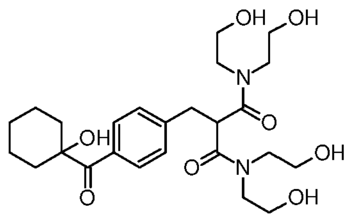

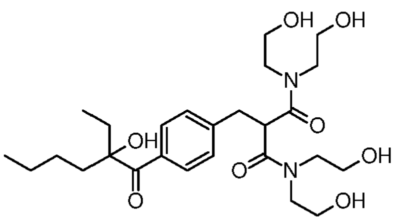

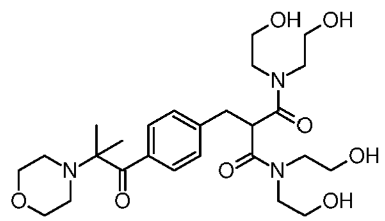

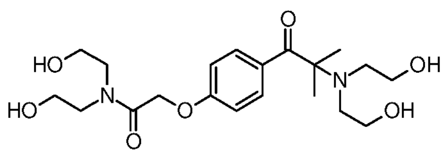

isomers thereof and combinations thereof.

In a preferred embodiment:

- g' is 0 or 1, preferably 0; and
- g" is at least 3, at least 4, at least 5 or at least 6.

In a particularly preferred embodiment, the compound of formula (4) is a multifunctional (meth)acrylate selected from di(pentaerythritol) penta(meth)acrylate, an alkoxylated di(pentaerythritol) penta(meth)acrylate, di(pentaerythritol) hexa(meth)acrylate, an alkoxylated di(pentaerythritol) hexa(meth)acrylate, pentaerythritol tetra(meth)acrylate, an alkoxylated pentaerythritol tetra(meth)acrylate, di(trimethylolpropane) tetra(meth)acrylate, an alkoxylated di(trimethylolpropane) tetra(meth)acrylate, trimethylolpropane tri(meth)acrylate, an alkoxylated trimethylolpropane tri(meth)acrylate, glyceryl tri(meth)acrylate, an alkoxylated glyceryl tri(meth)acrylate, sorbitol penta(meth)acrylate, an alkoxylated sorbitol penta(meth)acrylate, a hyperbranched polyester (meth)acrylate and combinations thereof.

The weight ratio of the multifunctional (meth)acrylate of formula (4) to the hydroxylated photoinitiator of formula (3) may be 95/5 to 50/50, in particular 90/10 to 60/40, more particularly 85/15 to 70/30.

The reaction may be carried out in the presence of a transesterification catalyst. The transesterification catalyst may be a metal-based transesterification catalyst, in particular a transesterification catalyst based on a metal selected from Zn, Zr, Ti or Sn, more particularly Zn(acetylacetonate)$_2$, Zr(acetylacetonate)$_4$, Ti(isopropoxy)$_4$ or nBuSnOOH.

The reaction may be carried out in the presence of a solvent, in particular a solvent selected from toluene, n-heptane, cyclohexane, methylcyclohexane and mixtures thereof. Preferably, the process is carried out without a solvent.

The reaction may be carried out in the presence of a stabilizer/polymerization inhibitor, in particular a polymerization inhibitor selected from hydroquinone (HQ), hydroquinone monomethyl ether (MEHQ, 4-methoxyphenol), 4-tert-butylcatechol (TBC), and 3,5-di-tertiobutyl-4-hydroxytoluene (BHT), phenothiazine (PTZ) and mixtures thereof.

The reaction may be carried out by simply heating the reaction medium. In particular, the reaction may be conducted at a temperature of at least 60°C, at least 70°C or at least 80°C. For example, the reaction may be conducted at a temperature of from 60 to 150°C, in particular from 70 to 140°C, more particularly from 80 to 130°C.

The reaction may be carried out until an equilibrium between the different species is reached. In particular, the reaction may be carried out for at least 2 hours, at least 4 hours, at least 6 hours, at least 12 hours, at least 18 hours or at least 24 hours.

Advantageously the reaction medium does not require further purification, in particular it does not require washing or azeotropic distillation, before it is photopolymerized.

<u>Photopolymerization process</u>

The binder of the invention may be used in a photopolymerization process, i.e. a process for photopolymerizing (e.g. curing) one or more ethylenically unsaturated compounds.

The process for photopolymerizing one or more ethylenically unsaturated compounds comprises contacting one or more ethylenically unsaturated compounds with a binder as defined above, and irradiating the mixture, in particular with visible and/or UV light.

The ethylenically unsaturated compound(s) may be as defined below.

<u>Polymerizable composition</u>

The polymerizable composition of the invention comprises the binder of the invention, referred to as component a). The polymerizable composition of the invention may further optionally comprise an ethylenically unsaturated compound, referred to as component b).

The polymerizable composition of the invention may comprise:

- 10 to 100%, in particular 20 to 95%, more particularly 30 to 90%, even more particularly 40 to 85%, of component a);
- 0 to 90%; in particular 5 to 80%, more particularly 10 to 70%, even more particularly 15 to 60%, of component b);

the % being % by weight based on the total weight of components a) and b).

The polymerizable composition of the invention may further comprise one or more compounds selected from:

- a photoinitiator;
- an amine synergist;
- an additive;
- a solvent.

*<u>Ethylenically unsaturated compound</u>*

The polymerizable composition of the invention may comprise an ethylenically unsaturated compound. The polymerizable composition of the invention may comprise a mixture of ethylenically unsaturated compounds.

As used herein, the term "ethylenically unsaturated compound" means a compound that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in a group selected from acrylate (including cyanoacrylate), methacrylate, acrylamide, methacrylamide, styrene, maleate, fumarate, itaconate, allyl, propenyl, vinyl and combinations thereof, preferably selected from acrylate, methacrylate and vinyl, more preferably selected from acrylate and methacrylate. The carbon-carbon double bonds of a phenyl ring are not considered as polymerizable carbon-carbon double bonds.

In one embodiment, the ethylenically unsaturated compound may be selected from a (meth)acrylate functionalized monomer, a (meth)acrylate functionalized oligomer, an amine-modified acrylate and mixtures thereof. In particular, the ethylenically unsaturated compound comprises an amine-modified acrylate and/or a (meth)acrylate functionalized oligomer and optionally a (meth)acrylate functionalized monomer.

The total amount of ethylenically unsaturated compound (including (meth)acrylate functionalized monomer, (meth)acrylate functionalized oligomer and amine-modified acrylate) in the polymerizable composition may be from 0

to 90%, in particular 5 to 80%, more particularly 10 to 70%, by weight based on the weight of the composition. In particular, the polymerizable composition may comprise 0 to 90%, or 0 to 80% or 0 to 70% or 0 to 60% or 0 to 50% by weight of ethylenically unsaturated compound based on the weight of the composition. Alternatively, the polymerizable composition may comprise 10 to 90%, or 15 to 90% or 20 to 90% or 25 to 90% or 30 to 90% by weight of ethylenically unsaturated compound based on the weight of the composition.

As used herein, the term "(meth)acrylate-functionalized monomer" means a monomer comprising a (meth)acryloyloxy group, in particular an acryloyloxy group. The term "(meth)acrylate-functionalized oligomer" means an oligomer comprising a (meth)acryloyloxy group, in particular an acryloyloxy group. The term "(meth)acryloyloxy group" encompasses acryloyloxy groups ($-O-CO-CH=CH_2$) and methacryloyloxy groups ($-O-CO-C(CH_3)=CH_2$).

In one embodiment, the ethylenically unsaturated compound comprises a (meth)acrylate-functionalized monomer. The ethylenically unsaturated compound may comprise a mixture of (meth)acrylate-functionalized monomers.

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 4 (meth)acrylate groups.

The (meth)acrylate-functionalized monomer may comprise a mixture of (meth)acrylate-functionalized monomers having different functionalities. For example the (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acryloyloxy and/or methacryloyloxy groups per molecule.

In one embodiment, the (meth)acrylate functionalized monomer comprises a mono(meth)acrylate-functionalized monomer. The mono(meth)acrylate-functionalized monomer may advantageously function as a reactive diluent and reduce the viscosity of the composition of the invention.

Examples of suitable mono(meth)acrylate-functionalized monomers include, but are not limited to, mono-(meth)acrylate esters of aliphatic alcohols (wherein the aliphatic alcohol may be straight chain, branched or cyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or cyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in the polymerizable compositions of the present invention: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

In one embodiment, the (meth)acrylate-functionalized monomer may comprise a (meth)acrylate-functionalized monomer containing two or more (meth)acryloyloxy groups per molecule.

Examples of suitable (meth)acrylate-functionalized monomers containing two or more (meth)acryloyloxy groups per molecule include acrylate and methacrylate esters of polyhydric alcohols (organic compounds containing two or more, e.g., 2 to 6, hydroxyl groups per molecule). Specific examples of suitable polyhydric alcohols include $C_{2-20}$ alkylene glycols (glycols having a $C_{2-10}$ alkylene group may be preferred, in which the carbon chain may be branched; e.g., ethylene glycol, trimethylene glycol, 1,2-propylene glycol, 1,2-butanediol, 1,3-butanediol, 2,3-butanediol, tetramethylene glycol (1,4-butanediol), 1,5-pentanediol, 1,6-hexanediol, 1,8-octanediol, 1,9-nonanediol, 1,12-dodecanediol, cyclohexane-1,4-dimethanol, bisphenols, and hydrogenated bisphenols, as well as alkoxylated (e.g., ethoxylated and/or propoxylated) derivatives thereof), diethylene glycol, glycerin, alkoxylated glycerin, triethylene glycol, dipropylene glycol, tripropylene glycol, trimethylolpropane, alkoxylated trimethylolpropane, ditrimethylolpropane, alkoxylated ditrimethylolpropane, pentaerythritol, alkoxylated pentaerythritol, dipentaerythritol, alkoxylated dipentaerythritol, cyclohexanediol, alkoxylated cyclohexanediol, cyclohexanedimethanol, alkoxylated cyclohexanedimethanol, norbornene dimethanol, alkoxylated norbornene dimethanol, norbornane dimethanol, alkoxylated norbornane dimethanol, polyols containing an aromatic ring, cyclohexane-1,4-dimethanol ethylene oxide adducts, bis-phenol ethylene oxide adducts, hydrogenated bisphenol ethylene oxide adducts, bisphenol propylene oxide adducts, hydrogenated bisphenol propylene oxide adducts, cyclohexane-1,4-dimethanol propylene oxide adducts, sugar alcohols and alkoxylated sugar alcohols. Such polyhydric alcohols may be fully or partially esterified (with (meth)acrylic acid, (meth)acrylic anhydride, (meth)acryloyl chloride or the like), provided they contain at least two (meth)acryloyloxy functional groups per molecule.

Exemplary (meth)acrylate-functionalized monomers containing two or more (meth)acryloyloxy groups per molecule may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

The polymerizable composition of the invention may comprise 0 to 90%, in particular 5 to 70%, more particularly 10 to 50%, by weight of (meth)acrylate-functionalized monomer based on the total weight of the polymerizable composition. In particular, the polymerizable composition of the invention may comprise 0 to 70%, or 0 to 60% or 0 to 50% or 0 to 40% or 0 to 30%, by weight of (meth)acrylate-functionalized monomer based on the total weight of the polymerizable composition. Alternatively, the polymerizable composition of the invention may comprise 10 to 90%, or 15 to 90% or 20 to 90% or 25 to 90% or 30 to 90%, by weight of (meth)acrylate-functionalized monomer based on the total weight of the polymerizable composition.

In one embodiment, the ethylenically unsaturated compound comprises a (meth)acrylate-functionalized oligomer. The ethylenically unsaturated compound may comprise a mixture of (meth)acrylate-functionalized oligomers.

The (meth)acrylate-functionalized oligomer may be selected in order to enhance the flexibility, strength and/or modulus, among other attributes, of a cured polymer prepared using the polymerizable composition of the present invention.

The (meth)acrylate functionalized oligomer may have 1 to 18 (meth)acryloyloxy groups, in particular 2 to 6 (meth)acryloyloxy groups, more particularly 2 to 6 acryloyloxy groups.

The (meth)acrylate functionalized oligomer may have a number average molecular weight equal or more than 600 g/mol, in particular 800 to 15,000 g/mol, more particularly 1,000 to 5,000 g/mol.

In particular, the (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers") and mixtures thereof.

Preferably, the (meth)acrylate-functionalized oligomer comprises a (meth)acrylate-functionalized urethane oligomer, more preferably an acrylate-functionalized urethane oligomer.

Advantageously, the (meth)acrylate-functionalized oligomer comprises a (meth)acrylate-functionalized urethane oligomer having two (meth)acryloyloxy groups, more preferably an acrylate-functionalized urethane oligomer having two acryloyloxy groups.

Exemplary polyester (meth)acrylate oligomers include the reaction products of acrylic or methacrylic acid or mixtures or synthetic equivalents thereof with hydroxyl group-terminated polyester polyols. The reaction process may

be conducted such that all or essentially all of the hydroxyl groups of the polyester polyol have been (meth)acrylated, particularly in cases where the polyester polyol is difunctional. The polyester polyols can be made by polycondensation reactions of polyhydroxyl functional components (in particular, diols) and polycarboxylic acid functional compounds (in particular, dicarboxylic acids and anhydrides). The polyhydroxyl functional and polycarboxylic acid functional components can each have linear, branched, cycloaliphatic or aromatic structures and can be used individually or as mixtures.

Examples of suitable epoxy (meth)acrylates include the reaction products of acrylic or methacrylic acid or mixtures thereof with an epoxy resin (polyglycidyl ether or ester). The epoxy resin may, in particular, by selected from bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy l-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Polyurethane (meth)acrylate oligomers (sometimes also referred to as "urethane (meth)acrylate oligomers") suitable for use in the polymerizable compositions of the present invention include urethanes based on aliphatic, cycloaliphatic and/or aromatic polyester polyols and polyether polyols and aliphatic, cycloalipahtic and/or aromatic polyester diisocyanates and polyether diisocyanates capped with (meth)acrylate end-groups. Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

The polyurethane (meth)acrylate oligomers may be prepared by reacting aliphatic, cycloaliphatic and/or aromatic polyisocyanates (e.g., diisocyanate, triisocyanate) with OH group terminated polyester polyols, polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxyl-functionalized (meth)acrylates such as hydroxyethyl acrylate or hydroxyethyl methacrylate to provide terminal (meth)acryloyloxy groups. For example, the polyurethane (meth)acrylate oligomers may contain two, three, four or more (meth)acryloyloxy functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethylsiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time.

Suitable acrylic (meth)acrylate oligomers (sometimes also referred to in the art as "acrylic oligomers") include oligomers which may be described as substances having an oligomeric acrylic backbone which is functionalized with one or (meth)acryloyloxy groups (which may be at a terminus of the oligomer or pendant to the acrylic backbone). The acrylic backbone may be a homopolymer, random copolymer or block copolymer comprised of repeating units of acrylic monomers. The acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acryloyloxy-containing reactants to introduce the desired (meth)acryloyloxy functional groups.

The polymerizable composition of the invention may comprise 0 to 50%, in particular 5 to 40%, more particularly 10 to 30%, by weight of (meth)acrylate-functionalized oligomer based on the total weight of the polymerizable composition. In particular, the polymerizable composition of the invention may comprise 0 to 50%, or 0 to 40% or 0 to 30% or 0 to 20% or 0 to 10%, by weight of (meth)acrylate-functionalized oligomer based on the total weight of the polymerizable composition. Alternatively, the polymerizable composition of the invention may comprise 5 to 50%, or 10 to 50% or 15 to 50% or 20 to 50% or 25 to 50%, by weight of (meth)acrylate-functionalized oligomer based on the total weight of the polymerizable composition.

In one embodiment, the ethylenically unsaturated compound comprises an amine-modified acrylate. The ethylenically unsaturated compound may comprise a mixture of amine-modified acrylates.

An amine-modified acrylate is obtained by reacting an acrylate-functionalized compound with an amine-containing compound (aza-Michael addition). The amine-modified acrylate comprises at least one remaining acrylate group (i.e. an acrylate group that has not reacted with the amine-containing compound during the aza-Michael addition) and/or at least one (meth)acrylate group (which may not be reactive towards primary or secondary amines).

The acrylate-functionalized compound may be an acrylate-functionalized monomer and/or acrylate-functionalized oligomer as defined above.

The amine-containing compound comprises a primary or secondary amine group and optionally a tertiary amine group. The amine-containing compound may comprise more than one primary and/or secondary amine groups. The amine-containing compound may be selected from monoethanolamine (2-aminoethanol), 2-ethylhexylamine, octylamine, cyclohexylamine, sec-butylamine, isopropylamine, diethylamine, diethanolamine, dipropylamine, dibutylamine, 2-(methylamino)ethano-1,2-methoxyethylamine, bis(2-hydroxypropyl)amine, diisopropylamine, dipentylamine, dihexylamine, bis(2-ethylhexyl)amine, 1,2,3,4-tetrahydroisoquinoline, N-benzylmethylamine, morpholine, piperidine, dioctylamine, and di-cocoamine, dimethylaminopropylamine, dimethylaminopropylaminopropylamine, 1,4-bis(3-aminopropyl)piperazine, 1,3-bis(aminomethyl)cyclohexane, 1,4-bis(3-aminopropyl)piperazine, aniline and an optionally substituted benzocaine (ethyl-4-aminobenzoate).

Examples of commercially available amine-modified acrylates include CN3705, CN3715, CN3755, CN381 and CN386, all available from Arkema. Polymeric or multi-amino versions are also suitable.

The polymerizable composition may comprise from 0% to 25%, in particular 2.5% to 20%, more particularly 5 to 15%, by weight of amine-modified acrylate based on the total weight of the polymerizable composition.

*Photoinitiator*

The polymerizable composition of the invention may comprise a photoinitiator other than the compounds of formula (1) included in the binder of the invention.

The photoinitiator other than the compounds of formula (1) included in the binder of the invention may be a radical photoinitiator, in particular a radical photoinitiator having Norrish type I activity and/or Norrish type II activity, more particularly a radical photoinitiator having Norrish type I activity.

Non-limiting types of radical photoinitiators suitable for use in the polymerizable compositions of the present invention include, for example, benzoins, benzoin ethers, acetophenones, $\alpha$-hydroxy acetophenones, benzyl, benzyl ketals, anthraquinones, phosphine oxides, acylphosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable radical photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, $\alpha$-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric $\alpha$-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, the photoinitiator other than a compound of formula (I) may be a benzophenone (such as Speedcure® BP, Speedcure® 7005, Speedcure® 7006), a thioxanthone (such as Speedcure® 7010, Speedcure® ITX), an $\alpha$-hydroxy acetophenone, an acylphosphine oxide (such as Speedcure® BPO, Speedcure® TPO, Speedcure® TPO-L). Preferably, the photoinitiator other than a compound of formula (I) is SpeedCure® BPO.

The molar ratio between the compounds of formula (1) included in the binder and the photoinitiator other than the compounds of formula (1) may be varied as may be appropriate depending on the photoinitiator(s) selected, the amounts and types of polymerizable species that are intended to be photopolymerized, the radiation source and the radiation conditions used, among other factors. Typically, however, the molar ratio between the compounds of formula (1) and the photoinitiator other than the compounds of formula (1) may be from 10/90 to 90/10, or from 20/80 to 80/20, or from 30/70 to 70/30, or from 40/60 to 60/40 or 45/55 to 55/45.

Advantageously, the polymerizable compositions of the present invention may be substantially free of a photoinitiator other than the compounds of formula (1) included in the binder of the invention. For example, the polymerizable composition of the present invention may contain less than 5% or less than 3% or less than 2% or less than 1% or less than 0.5% or less than 0.1% or even 0% by weight of photoinitiator other than the compounds of formula (1), based on the total weight of the polymerizable composition.

*Amine synergist*

The polymerizable composition of the present invention may comprise an amine synergist. The polymerizable composition may comprise a mixture of amine synergists.

Amine synergists may be introduced in the polymerizable composition of the present invention in order to act synergistically with Norrish Type II photoinitiators and/or to reduce oxygen inhibition. Amine synergists are typically tertiary amines. When used in conjunction with Norrish Type II photoinitiators, the tertiary amine provides an active hydrogen donor site for the excited triple state of the photoinitiator, thus producing a reactive alkyl-amino radical which can subsequently initiate polymerization. Tertiary amines are also able to convert unreactive peroxy species, formed by reaction between oxygen and free radicals, to reactive alkyl-amino radicals, thus reducing the effects of oxygen on curing.

When the polymerizable composition comprises an amine-modified acrylate monomer or oligomer as defined above, an amine synergist may not need to be added to the composition.

Examples of suitable amine synergists include low-molecular weight tertiary amines (i.e. having a molecular weight of less than 200 g/mol) such as triethanol amine, N-methyldiethanol amine. Other types of amine synergists are aminobenzoates, polymerizable aminobenzoates, polymeric aminobenzoates and mixtures thereof. Examples of aminobenzoates include ethyl 4-(dimethylamino)benzoate (EDB), pentyl 4-(dimethylamino)benzoate, 2-ethylhexyl 4-(dimethylamino)benzoate and 2-butoxyethyl 4-(dimethylamino)benzoate (BEDB).

The concentration of amine synergist in the polymerizable composition will vary depending on the type of compound that is used. Typically, however, the polymerizable composition is formulated to comprise from 0% to 15%, in particular 0.5% to 10%, more particularly 1 to 5%, by weight of amine synergist based on the total weight of the polymerizable composition.

*Additives*

The polymerizable composition of the present invention may comprise an additive. The polymerizable composition may comprise a mixture of additives.

In particular, the additive may be selected from stabilizers (antioxidants, light blockers/absorbers, polymerization inhibitors) foam inhibitors, flow or leveling agents, colorants, dispersants, slip additives, fillers, chain transfer agents, thixotropic agents, matting agents, impact modifiers, waxes, mixtures thereof, and any other additives conventionally used in the coating, sealant, adhesive, molding, 3D printing or ink arts.

The polymerizable composition may comprise a stabilizer.

Stabilizers may be introduced in the polymerizable composition of the present invention in order to provide

adequate storage stability and shelf life. Further, stabilizers may be used during the preparation of the polymerizable composition, to protect against unwanted reactions during processing of the ethylenically unsaturated components of the polymerizable composition. A stabilizer may be a compound or substance which retards or prevents reaction or curing of actinically-polymerizable functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). The stabilizer may, in particular be a free radical stabilizer (i.e. a stabilizer which functions by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized. Other stabilizers known in the art such as hydroquinone (HQ), 4-tert-butylcatechol (TBC), 3,5-di-tertiobutyl-4-hydroxytoluene (BHT), phenothiazine (PTZ), pyrogallol, phosphite compounds, triphenyl antimony and tin(II) salts.

The concentration of stabilizer in the polymerizable composition will vary depending upon the particular stabilizer or combination of stabilizers selected for use and also on the degree of stabilization desired and the susceptibility of components in the polymerizable compositions towards degradation in the absence of stabilizer. Typically, however, the polymerizable composition is formulated to comprise from 5 to 5000 ppm stabilizer. According to certain embodiments of the invention, the reaction mixture during each stage of the method employed to make the polymerizable composition contains at least some stabilizer, e.g., at least 10 ppm stabilizer.

The polymerizable composition may comprise a colorant. A colorant may be a dye, a pigment and mixtures thereof. The term "dye", as used herein means a colorant having a solubility of 10 mg/L or more in the medium in which it is introduced at 25°C. The term "pigment" is defined in DIN 55943, as a colorant that is practically insoluble in the application medium under the pertaining ambient conditions, hence having a solubility of less than 10 mg/L therein at 25°C. The term "C.I." is used as an abbreviation for Colour Index.

The colorant may be a pigment. Organic and/or inorganic pigments may be used. If the colorant is not a self-dispersible pigment, the inkjet inks preferably also contain a dispersant, more preferably a polymeric dispersant. The pigment may be black, cyan, magenta, yellow, red, orange, violet, blue, green, brown and mixtures thereof. Pigments may be chosen from those disclosed by HERBST, Willy, et al. Industrial Organic Pigments, Production, Properties, Applications. 3rd edition. Wiley - VCH , 2004. ISBN 3527305769.

Particular pigments include:

- Carbon black;
- C.I. Pigment White 1, 3, 4, 5, 6, 7, 10, 11, 12, 14, 17, 18, 19, 21, 24, 25, 27, 28 and 32;
- C.I. Pigment Yellow 1 , 3, 10, 12, 13, 14, 17, 55, 65, 73, 74, 75, 83, 93, 97, 109, 111, 120, 128, 138, 139, 150, 151 , 154, 155, 180,185 and 213;
- C.I. Pigment Red 17, 22, 23, 41 , 48:1 , 48:2, 49:1 , 49:2, 52:1 , 57:1 , 81 :1 , 81 :3, 88, 112, 122, 144, 146, 149, 169,170, 175, 176, 184, 185, 188, 202, 206, 207, 210, 216, 221 , 248, 251 , 254, 255, 264, 270 and 272;
- C.I. Pigment Violet 1 , 2, 19, 23, 32, 37 and 3;
- C.I. Pigment Blue 15:1 , 15:2, 15:3, 15:4, 15:6, 16, 56, 61 and (bridged) aluminium phthalocyanine pigments;
- C.I. Pigment Orange 5, 13, 16, 34, 40, 43, 59, 66, 67, 69, 71 and 73;
- C.I. Pigment Green 7 and 36;
- C.I. Pigment Brown 6 and 7;

and mixtures thereof.

The polymerizable composition of the invention may comprise a dispersant. The dispersant may be used to disperse an insoluble material such as a pigment or filler in the polymerizable composition.

The dispersant may be a polymeric dispersant, a surfactant and mixtures thereof.

Typical polymeric dispersants are copolymers of two, three, four, five or even more monomers. The properties of polymeric dispersants depend on both the nature of the monomers and their distribution in the polymer. Copolymeric dispersants preferably have the following polymer compositions:

- random copolymer (e.g. ABBAABAB);
- alternating copolymer (e.g. ABABABAB);
- gradient copolymer (e.g. AAABAABBABBB) ;
- block copolymers (e.g. AAAAABBBBBB);
- graft copolymers (polymeric backbone with polymeric side chains attached to the backbone); and mixed forms of these copolymers.

The polymeric dispersant may have a number average molecular weight Mn between 500 and 30000, more preferably between 1500 and 10000.

Commercial examples of polymeric dispersants include:

- DISPERBYK® dispersants available from BYK CHEMIE GMBH;
- SOLSPERSE® dispersants available from LUBRIZOL;
- TEGO® DISPERSE dispersants from EVONIK;
- DISPEX®, EFKA® and JONCRYL® dispersants from BASF;
- DISPONER® dispersants from ELEMENTIS.

*Solvent*

The polymerizable composition of the invention may be solvent-based or water-based. As used herein, the term "solvent" means a non-reactive organic solvent, i.e. a solvent comprising carbon and hydrogen atom that does not react when exposed to the actinic radiation used to cure the polymerizable compositions described herein.

Advantageously, the polymerizable compositions of the present invention may be formulated to be solvent-free. For example, the polymerizable compositions of the present invention may contain little or no solvent, e.g., less than 10% or less than 5% or less than 1% or even 0% by weight of solvent, based on the total weight of the polymerizable composition.

*Formulations*

The polymerizable composition of the invention may be formulated as a one component or one part system. That is, the polymerizable composition may be cured directly, i.e. it is not combined with another component or second part prior to being cured.

In a first embodiment, the polymerizable composition of the invention may comprise:

a) the binder according to the invention;
optionally b) an ethylenically unsaturated compound;
optionally c) an amine synergist;
optionally d) a photoinitiator other than the compounds of formula (1) included in the binder of the invention;
e) optionally an additive;
f) optionally a solvent.

The polymerizable composition of the first embodiment may comprise or consist essentially of:

a) 10 to 100%, in particular 20 to 95%, more particularly 30 to 90%, of binder according to the invention;
b) 0 to 90%, in particular 5 to 80%, more particularly 10 to 70%, of ethylenically unsaturated compound;
c) 0 to 10%, in particular 0.5 to 6%, more particularly 1 to 3%, of photoinitiator other than a compound of formula (I);
d) 0 to 15%, in particular 0 to 10%, more particularly 0 to 5%, of amine synergist;
e) 0 to 30% of additive;
f) 0 to 30% of solvent;

wherein the % are % by weight based on the weight of the composition.

Preferably, the polymerizable composition of the invention does not comprise any component other than components a)-f). Accordingly, the total weight of components a), b), c), d), e) and f) may represent 100% of the weight of the composition.

In preferred embodiments of the invention, the polymerizable composition is a liquid at 25°C. In various embodiments of the invention, the polymerizable compositions described herein are formulated to have a viscosity of less than 10,000 mPa.s, or less than 5,000 mPa.s, or less than 1,000 mPa.s, or less than 500 mPa.s, or less than 250 mPa.s, or even less than 100 mPa.s as measured at 25°C using a Brookfield viscometer, model DV-II, using a 27 spindle (with the spindle speed varying typically between 20 and 200 rpm, depending on viscosity). In advantageous embodiments of the invention, the viscosity of the polymerizable composition is from 10 to 10,000 mPa.s, or from 10 to 5,000 mPa.s, or from 10 to 1,000 mPa.s, or from 10 to 500 mPa.s, or from 10 to 250 mPa.s, or from 10 to 100 mPa.s at 25°C.

The polymerizable compositions described herein may be compositions that are to be subjected to curing by means of free radical polymerization. In particular embodiments, the polymerizable compositions may be photocured (i.e., cured by exposure to actinic radiation such as light, in particular visible or UV light). In particular, the composition may be cured by a LED light source.

The polymerizable composition of the invention may be an ink composition, an overprint varnish composition, a coating composition, an adhesive composition, a sealant composition, a molding composition, a dental composition, a cosmetic composition or a 3D-printing composition, in particular an ink composition.

End use applications for the polymerizable compositions include, but are not limited to, inks, coatings, adhesives, additive manufacturing resins (such as 3D printing resins), molding resins, sealants, composites, antistatic layers, electronic applications, recyclable materials, smart materials capable of detecting and responding to stimuli, packaging materials, personal care articles, cosmetics, articles for use in agriculture, water or food processing, or animal husbandry, and biomedical materials. The polymerizable compositions of the invention thus find utility in the production of biocompatible articles. Such articles may, for example, exhibit high biocompatibility, low cytotoxicity and/or low extractables.

The composition according to the invention may in particular be used to obtain a cured product and a 3D printed article according to the following processes.

Process for the preparation of a cured product and a 3D-printed article

The process for the preparation of a cured product according to the invention comprises curing the binder of the invention or the polymerizable composition of the invention. In particular, the binder or the polymerizable composition may be cured by exposing the binder or the polymerizable composition to radiation. More particularly, the binder or the polymerizable composition may be cured by exposing the binder or the polymerizable composition to UV, near-UV and/or visible radiation.

Curing may be accelerated or facilitated by supplying energy to the binder or the polymerizable composition, such as by heating the binder or the polymerizable composition. Thus, the cured product may be deemed as the reaction product of the binder or the polymerizable composition, formed by curing. The binder or the polymerizable composition may be partially cured by exposure to actinic radiation, with further curing being achieved by heating the partially cured article. For example, a product formed from the binder or the polymerizable composition may be heated at a temperature of from 40°C to 120°C for a period of time of from 5 minutes to 12 hours.

Prior to curing, the binder or the polymerizable composition may be applied to a substrate surface in any known conventional manner, for example, by spraying, jetting, knife coating, roller coating, casting, drum coating, dipping, and the like and combinations thereof. Indirect application using a transfer process may also be used.

The substrate on which the binder or the polymerizable composition is applied and cured may be any kind of substrate. Suitable substrates are detailed below. When used as an adhesive, the binder or the polymerizable composition may be placed between two substrates and then cured, the cured binder or the cured composition thereby bonding the substrates together to provide an adhered article. Binders and polymerizable compositions in accordance with the present invention may also be formed or cured in a bulk manner (e.g., the binder or the polymerizable composition may be cast into a suitable mold and then cured).

The cured product obtained with the process of the invention may be an ink, an overprint varnish, a coating, an adhesive, a sealant, a molded article, a dental material, a cosmetic product or a 3D-printed article, in particular an ink.

A 3D-printed article may, in particular, be obtained with a process for the preparation of a 3D-printed article that comprises printing a 3D article with the binder or the polymerizable composition of the invention. In particular, the process may comprise printing a 3D article layer by layer or continuously.

A plurality of layers of the binder or the polymerizable composition in accordance with the present invention may be applied to a substrate surface; the plurality of layers may be simultaneously cured (by exposure to a single dose of radiation, for example) or each layer may be successively cured before application of an additional layer of the binder or the polymerizable composition.

The binders and polymerizable compositions which are described herein can be used as resins in three-dimensional printing applications. Three-dimensional (3D) printing (also referred to as additive manufacturing) is a process in which a 3D digital model is manufactured by the accretion of construction material. The 3D printed object is created by utilizing the computer-aided design (CAD) data of an object through sequential construction of two dimensional (2D) layers or slices that correspond to cross-sections of 3D objects. Stereolithography (SL) is one type of additive manufacturing where a liquid resin is hardened by selective exposure to a radiation to form each 2D layer. The radiation can be in the form of electromagnetic waves or an electron beam. The most commonly applied energy source is ultraviolet, visible or infrared radiation.

Sterolithography and other photocurable 3D printing methods typically apply low intensity light sources to radiate each layer of a photocurable resin to form the desired article. As a result, photocurable resin polymerization kinetics and the green strength of the printed article are important criteria if a particular photocurable resin will sufficiently polymerize (cure) when irradiated and have sufficient green strength to retain its integrity through the 3D printing process and post-processing.

The binders and polymerizable compositions of the invention may be used as 3D printing resin formulations, that is, compositions intended for use in manufacturing three-dimensional articles using 3D printing techniques. Such

three-dimensional articles may be freestanding/self-supporting and may consist essentially of or consist of a composition in accordance with the present invention that has been cured. The three-dimensional article may also be a composite, comprising at least one component consisting essentially of or consisting of a cured binder or cured composition as previously mentioned as well as at least one additional component comprised of one or more materials other than such the cured binder or the cured composition (for example, a metal component, a thermoplastic component or a particulate or fibrous reinforcement). The binders and polymerizable compositions of the present invention are particularly useful in digital light printing (DLP), although other types of three-dimensional (3D) printing methods may also be practiced using the inventive polymerizable compositions (e.g., SLA, inkjet, multi-jet printing, piezoelectric printing, actinically-cured extrusion, and gel deposition printing). The binders and polymerizable compositions of the present invention may be used in a three-dimensional printing operation together with another material which functions as a scaffold or support for the article formed from the binder or the polymerizable composition of the present invention.

Thus, the binders and polymerizable compositions of the present invention are useful in the practice of various types of three-dimensional fabrication or printing techniques, including methods in which construction of a three-dimensional object is performed in a step-wise or layer-by-layer manner. In such methods, layer formation may be performed by solidification (curing) of the binder or the polymerizable composition under the action of exposure to radiation, such as visible, UV or other actinic irradiation. For example, new layers may be formed at the top surface of the growing object or at the bottom surface of the growing object. The binders and polymerizable compositions of the present invention may also be advantageously employed in methods for the production of three-dimensional objects by additive manufacturing wherein the method is carried out continuously. For example, the object may be produced from a liquid interface. Suitable methods of this type are sometimes referred to in the art as "continuous liquid interface (or interphase) product (or printing)" ("CLIP") methods. Such methods are described, for example, in WO 2014/126830; WO 2014/126834; WO 2014/126837; and Tumbleston et al., "Continuous Liquid Interface Production of 3D Objects," Science Vol. 347, Issue 6228, pp. 1349-1352 (March 20, 2015.

The binder or the polymerizable composition may be supplied by ejecting it from a printhead rather than supplying it from a vat. This type of process is commonly referred to as inkjet or multijet 3D printing. One or more UV curing sources mounted just behind the inkjet printhead cures the binder or the polymerizable composition immediately after it is applied to the build surface substrate or to previously applied layers. Two or more printheads can be used in the process which allows application of different compositions to different areas of each layer. For example, compositions of different colors or different physical properties can be simultaneously applied to create 3D printed parts of varying composition. In a common usage, support materials - which are later removed during post-processing - are deposited at the same time as the compositions used to create the desired 3D printed part. The printheads can operate at temperatures from about 25°C up to about 100°C. Viscosities of the binders or the polymerizable compositions should be less than 30 mPa.s at the operating temperature of the printhead.

The process for the preparation of a 3D-printed article may comprise the steps of:

a) providing (e.g., coating) a first layer of the binder or the polymerizable composition in accordance with the present invention onto a surface;
b) curing the first layer, at least partially, to provide a cured first layer;
c) providing (e.g., coating) a second layer of the binder or the polymerizable composition onto the cured first layer;
d) curing the second layer, at least partially, to provide a cured second layer adhered to the cured first layer; and
e) repeating steps c) and d) a desired number of times to build up the three-dimensional article.

After the 3D article has been printed, it may be subjected to one or more post-processing steps. The post-processing steps can be selected from one or more of the following steps removal of any printed support structures, washing with water and/or organic solvents to remove residual resins, and post-curing using thermal treatment and/or actinic radiation either simultaneously or sequentially. The post-processing steps may be used to transform the freshly printed article into a finished, functional article ready to be used in its intended application.

Process of inkjet printing

The process of inkjet printing according to the invention comprised jetting the binder or the polymerizable composition of the invention onto a substrate.

The substrate on which the binder or the polymerizable composition is jetted may be any kind of substrate. Suitable substrates are detailed below.

The binder or the polymerizable composition may be jetted by one or more print heads ejecting small droplets in a controlled manner through nozzles onto a substrate moving relative to the print head(s).

The print head may be a piezoelectric head or a continuous type print head.

The inkjet printing process may be carried out in a single pass or with a multi-pass printing mode.

The inkjet printing process may further comprise a UV-curing step. In inkjet printing, the UV curing device may be arranged in combination with the print head of the inkjet printer, travelling therewith so that the liquid UV curable inkjet ink is exposed to curing radiation very shortly after been jetted.
In a particularly preferred embodiment, the UV curing step is performed using UV LED light sources.
For facilitating curing, the inkjet printer may include one or more oxygen depletion units. The oxygen depletion units place a blanket of nitrogen or other relatively inert gas (e.g. CO2), with adjustable position and adjustable inert gas concentration, in order to reduce the oxygen concentration in the curing environment.

Substrate

The substrate on which the binder or the polymerizable composition of the invention is applied may be any kind of substrate.
The substrate may be a ceramic, metallic, mineral, cellulosic, animal-based or polymeric substrate. The substrate may also be a part of a human body, such as a tooth or a nail.
The substrate may be porous or substantially non-porous. The substrates may be transparent, translucent or opaque.
Examples of ceramic substrates include alumina-based ceramics and zirconia-based ceramics.
Examples of metallic substrates include titanium, gold, silver, copper, brass, steel and bronze.
Examples of mineral substates include glass, asbestos and basalt.
Examples of cellulosic substrates include plain paper or resin coated paper (e.g. polyethylene or polypropylene coated paper). There is no real limitation on the type of paper and it includes newsprint paper, magazine paper, office paper, wallpaper but also paper of higher grammage, usually referred to as boards, such as white lined chipboard, corrugated board and packaging board. Further examples of cellulosic substrates include bamboo, cotton, flax, hemp, jute, lyocell, modal, rayon, raffia, ramie and sisal.
Examples of cellulosic substrates include wool, fur, silk and leather.
Examples of polymeric substrates include polyethylene, polypropylene, polycarbonate, polyvinyl chloride, polyethylene terephthalate, polyethylene naphthalate, polylactide, polyamide, polyimide, polyacrylonitrile, polyurethane, acrylonitrile butadiene styrene.
There is no restriction on the shape of the substrate. It can be a sheet, a film, a non-woven or woven fiber mat or a three dimensional object.
In particular, the substrate may be selected from a food and beverage packaging, a pharmaceutical packaging, a textile, a nail, a tooth, a medical device, a food and beverage processing equipment, a water pipe.

Uses

The binder of the invention may be used as a photoinitiating system in a radiation curable composition, in particular in a UV or LED-curable composition.
As used herein, "UV curable composition" means a composition cured by exposure to UV light emitted by a mercury light source, in particular a mercury-vapor lamp, and "LED-curable composition" means curing by exposure to UV light emitted by a LED light source, in particular a LED light source having an emission band in the range of 365-420 nm.
The binder of the invention may be used in a photopolymerization reaction. The photopolymerization reaction may be used to photopolymerize (e.g. cure) one or more ethylenically unsaturated compounds as defined above.
The binder of the invention may be used in an ink composition, an overprint varnish composition, a coating composition, an adhesive composition, a sealant composition, a molding composition, a dental composition, a cosmetic composition or a 3D-printing composition.
The binder of the invention may be used to obtain a cured product having a reduced amount of extractables. In particular, the cured product may be an ink, an overprint varnish, a coating, an adhesive, a sealant, a molded article, a dental material or a 3D-printed article, in particular an ink.
The reduction in the amount of extractables may be assessed in comparison with a cured product obtained with a conventional thioxanthone (i.e. a non-polymerizable thioxanthone, such as isopropylthioxanthone, or a polymeric thioxanthone).
The extractables may be any component that migrates from the cured product. In particular, the extractables may be a photoinitiator or a residue thereof.
Migration in inkjet inks may occur in different ways:

Penetration Migration - through the substrate to the reverse-side of the print;
Set-off Migration - from the printed side of a substrate to the reverse side of the substrate while stacked or stored on a roll;

Vapor-phase migration - evaporation of volatile compounds when heated;
Condensation Extraction - condensation of critical compounds when cooked or sterilized.

The amount of extractables may be determined quantitatively using a suitable analytical method such as liquid chromatography mass spectroscopy (LC-MS). For example, the polymerizable composition can be applied in 12 μm thickness film on a glass substrate, and crosslinked using a UV Hg lamp. Resulting cured films are removed from the glass plate, weighed and soaked in solvent such as acetonitrile or dichloromethane. The liquid fraction is finally evaporated and the residue, corresponding to the extractables part, is weighed, allowing to determine the amount of product that is uncured (not trapped within the photocured network).

Analytical methods such as nuclear magnetic resonance (NMR), liquid chromatography mass spectroscopy (LC-MS) or gas chromatography mass spectroscopy (GC-MS) may then be used to identify the nature of the extractables and refine their corresponding content.

In particular, the cured product may have less than 5%, less than 2%, less than 1%, less than 0.5%, less than 0.25% or less than 0,1%, by weight of extractables based on the weight of the cured product.

The binder or polymerizable composition of the invention may be used to obtain an ink, an overprint varnish, a coating, an adhesive, a sealant, a molded article, a dental material or a 3D-printed article, in particular an ink.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein. Although the invention is illustrated and described herein with reference to specific embodiments, the invention is not intended to be limited to the details shown. Rather, various modifications may be made in the details within the scope and range of equivalents of the claims and without departing from the invention.

## Examples

### Material

The following materials were used in the examples:

| Abbreviation | Chemical name/Formula | Supplier |
|---|---|---|
| CN2303EU | Hyperbranched polyester acrylate oligomer | Arkema |
| CN3755 | 1,6-Hexanediol diacrylate, 2-aminoethanol polymer | Arkema |
| CN2565 | amine-multifunctional acrylate based oligomer | Arkema |
| CN991 | Urethane acrylate oligomer | Arkema |
| SR341 | 3-Methyl-1,5-pentanediyl diacrylate | Arkema |
| SR494 | Ethoxylated pentaerythritol tetraacrylate | Arkema |
| SR9020 | Propoxylated glycerol triacrylate | Arkema |
| CN2505 | Polyester acrylate | Arkema |
| Bz2OH | 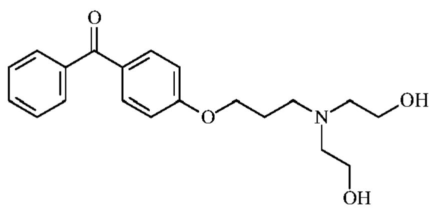 | Arkema |
| Tx2OH | 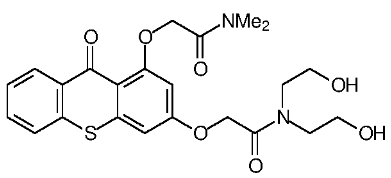 | Arkema |
| MEHQ | Methyl ether of hydroquinone | Rhodia |

(continued)

| Abbreviation | Chemical name/Formula | Supplier |
|---|---|---|
| BHT | Bis-tertiobutyl hydroxytoluene | Innochem |
| $TPP^{te}$ | Triphenylphosphite | Akzo Nobel |
| TEMPOL | 4-hydroxy-2,2,6,6-tetramethylpiperidinyloxyl | Evonik |
| $Zn(AcAc)_2$ | Zinc(II) acetylacetonate | Sachem |
| $Zr(AcAc)_4$ | Zirconium(IV) acetylacetonate | Dorf Ketal |
| SpeedCure BP | benzophenone | Arkema |
| SpeedCure 73 | 2-hydroxy-2-methyl-1-phenylpropanone | Arkema |
| ITX | isopropyl thioxanthone (type II photoinitiator) | Arkema |

Methods

The following methods were used in the application:

*Viscosity*

The viscosity was determined using the Noury method (falling-ball viscometer) which measures the elapsed time required for a steel ball to fall under gravity through a tube filled with the sample. Measuring conditions may be found in AFNOR XP.T51-213 (November 1995) standard. The measurements were made in a 16mm x 160 mm test tube with a 2 mm diameter steel ball and the path of the ball was 104 mm. Under these conditions, the dynamic viscosity is proportional to the travel time of the ball, with a travel time of 1 second corresponding to a viscosity of 0.1 Pa.s.

*Aspect*

The product was visually observed in daylight, through a 60 ml transparent glass bottle to determine whether the product is:

- Clear: no turbidity, comparable to water,
- Veiled: no longer allowing a clear vision through the bottle,
- Hazy: opaque vial, nothing can be seen through the vial.

*Reactivity under mercury lamp (UV-Hg)*

The formulations were applied as a 12 $\mu$m film on a contrast card Form 1B Penoparc chart from Leneta) and cured with a Fusion mercury lamp at 120 W/cm$^2$. The minimum passage speed necessary (in m/min) to obtain a dry film to the touch was measured.

*Determination of amount of extractables*

The formulations were applied as a 12 $\mu$m film on a glass plate and cured with a Fusion mercury lamp (120 W/cm$^2$) at a speed of 10 m/min (two passes). After the coating dried for 24h at 23°C, the film was removed from the glass plate . 600 mg of film were soaked two times in 5 mL dicholomethane. The liquid fraction was evaporated and the residue, corresponding to extractables, was weighed. The amount of extractables is expressed as a % by weight of residue based on the weight of the cured film.

Example 1: Preparation of a binder according to the invention

In a 500 ml inactinic kettle, equipped with an anchor stirring device, a condenser, an air sparge pipe and a thermometer, were added 305.51 g of SR494 (0.58 mole), 0.36 g MEHQ (1000 ppm), 0.36 g of BHT (1000 ppm) 0.36 g of $TPP^{te}$ (1000 ppm) and 0.04 g of TEMPOL (100 ppm). Temperature was raised to 80°C within one hour, while stirring and sparging air in order to prevent the reaction mixture from polymerizing, thanks to oxygen inhibition of free radicals.

Once the reaction mixture was homogeneous, 54,43 g of Bz2OH (0.16 mole ; 15 % w/w versus total load) were added. Agitation at 80°C was then maintained for one hour. Once the reaction mixture was homogeneous, 1.80 g of $Zn(AcAc)_2$ (5000 ppm) were added and the temperature was raised to 100°C in one hour. A sample was taken every hour for gas chromatography monitoring, until the composition was stable (equilibrium was reached), which took circa 20 hours.

Example 2: Preparation of a binder according to the invention

Example 1 was reproduced except that the amount of Bz2OH was 25% w/w versus total load.

Example 3: Preparation of a binder according to the invention

Example 2 was reproduced except that $Zn(AcAc)_2$ was replaced with $Zr(AcAc)_4$.

Example 4: Preparation of a binder according to the invention

Example 2 was reproduced except that SR494 was replaced with SR9020.

Example 5: Preparation of a binder according to the invention

Example 2 was reproduced except that SR494 was replaced with CN2303.

Example 6: Preparation of a binder according to the invention

Example 2 was reproduced except that SR494 was replaced with CN2505.

Example 7: Preparation of a binder according to the invention

Example 1 was reproduced except that Bz2OH was replaced with is Tx2OH.

Example 8: Preparation of a binder according to the invention

Example 7 was reproduced except that the amount of Tx2OH was 25% w/w versus total load.

Characterization of the binders of examples 1-8

The binders of examples 1-8 had the following features

| Parameters | | | | | Viscosity @25°C (mPa.s) | Aspect | OH value** (mg KOH/g) |
|---|---|---|---|---|---|---|---|
| Ex | 2a | 1c | | Catalyst | | | |
| | | Type | wt%* | | | | |
| 1 | SR494 | Bz2OH | 15 | Zn(Acac)2 | 290 | Clear | 49.1 |
| 2 | SR494 | Bz2OH | 25 | Zn(Acac)2 | 580 | Hazy | 81.8 |
| 3 | SR494 | Bz2OH | 25 | Zr(Acac)4 | 5400 | Hazy | 81.8 |
| 4 | SR9020 | Bz2OH | 25 | Zn(Acac)2 | 470 | Hazy | 81.8 |
| 5 | CN2303EU | Bz2OH | 25 | Zn(Acac)2 | 750 | Hazy | 81.8 |
| 6 | CN2505 | Bz2OH | 25 | Zn(Acac)2 | 2960 | Hazy | 81.8 |
| 7 | SR494 | Tx2OH | 15 | Zn(Acac)2 | 465 | Hazy | 35.5 |
| 8 | SR494 | Tx2OH | 25 | Zn(Acac)2 | 3200 | Hazy | 59.2 |

* wt% based on total load
** OH value is calculated as the weight average OH value of species 1a, 1b, 1c, 2a, 2b and 2c

| Parameters | | | | Composition | | | | | |
|---|---|---|---|---|---|---|---|---|---|
| Ex | 2a | 1c | | wt%** | | | | | |
| | | Type | wt%* | 1a | 1b | 1c | 2a | 2b | 2c |
| 1 | SR494 | Bz2OH | 15 | 14.89 | 3.95 | 0.26 | 48.47 | 32.41 | 0.02 |
| 2 | SR494 | Bz2OH | 25 | 19.92 | 9.98 | 1.23 | 27.53 | 41.23 | 0.11 |
| 3 | SR494 | Bz2OH | 25 | 19.92 | 9.98 | 1.23 | 27.53 | 41.23 | 0.11 |
| 4 | SR9020 | Bz2OH | 25 | 20.15 | 9.84 | 1.18 | 35.98 | 32.37 | 0.48 |
| 5 | CN2303EU | Bz2OH | 25 | 17.45 | 11.44 | 1.84 | 11.22 | 58.03 | 0.02 |
| 6 | CN2505 | Bz2OH | 25 | 16.37 | 12.02 | 2.16 | 81.61 | 50.42 | 0.42 |
| 7 | SR494 | Tx2OH | 15 | 14.97 | 2.96 | 0.15 | 56.17 | 25.74 | 0.01 |
| 8 | SR494 | Tx2OH | 25 | 21.10 | 7.89 | 0.73 | 35.45 | 34.79 | 0.04 |

* wt% based on total load
** wt% based on the total weight of 1a + 1b + 1c + 2a + 2b + 2c
wherein
1a = fully (meth)acrylated photoinitiator (only (meth)acrylate groups)
1b = partially (meth)acrylated photoinitiator(s) (OH and (meth)acrylate groups)
1c = initial polyhydroxylated photoinitiator (only OH groups)
2a = initial multifunctional (meth)acrylate (only (meth)acrylate groups)
2b = partially hydrolyzed multifunctional (meth)acrylate(s) (OH and (meth)acrylate groups)
2c = fully hydrolyzed multifunctional (meth)acrylate (only OH groups)

Example 9: curable compositions

Formulations F1 to F11 were obtained by mixing the ingredients indicated in the table below (amounts indicated in % weight based on the weight of the composition) at 80°C. F1 and F6 to F11 are according to the invention. F2 to F5 are comparative formulations

| | F1 | F2 | F3 | F4 | F5 | F6 | F7 | F8 | F9 | F10 | F11 |
|---|---|---|---|---|---|---|---|---|---|---|---|
| Binder of Example 1 | 100 | | | | | 30 | 100 | | | | |
| Binder of Example 5 | | | | | | | | 30 | | | |
| Binder of Example 7 | | | | | | | | | 100 | 90 | 25 |
| SpeedCure BP | | | | 15 | 7 | | | | | | |
| SpeedCure 73 | | 4 | | | | | | | | | |
| SpeedCure 9001 | | | 15 | | | | | | | | |
| SpeedCure ITX | | | | | | 5 | | 5 | | | |
| CN3755 | | | | 19 | 19 | | | | | | |
| CN3715 | | | | | | | | | | 10 | 10 |
| CN2303EU | | 96 | 85 | 66 | 74 | | | | | | 65 |
| CN2565 | | | | | | 15 | | 15 | | | |
| CN991 | | | | | | 20 | | 20 | | | |
| SR341 | | | | | | 30 | | 30 | | | |
| | | | | | | | | | | | |
| Reactivity UV-Hg (m/min) | 50 | 15 | 50 | 40 | 45 | 80 | 50 | 70 | 25 | 100 | 40 |

(continued)

| | F1 | F2 | F3 | F4 | F5 | F6 | F7 | F8 | F9 | F10 | F11 |
|---|---|---|---|---|---|---|---|---|---|---|---|
| Extractibles | 1,5% | N.D | 4,8% | N.D | N.D | N.D | N.D | N.D | N.D | N.D | N.D |

Formulations F1 and F6 to F11 exhibit high reactivity even with no or low additional amine synergist, nor important quantities of photoinitiators. The amount of extractables from photocured formulations F1 and F3 was compared. The use of the binder of the invention leads to a cured product having a much lower amount of extractables than that obtained with a reference formulation where the multifunctional acrylate and the photoinitiator are used as such (without being reacted in the presence of a transesterifications catalyst).

## Claims

1. A binder comprising a mixture M1 of compounds of formula (1) and a mixture M2 of compounds of formula (2):

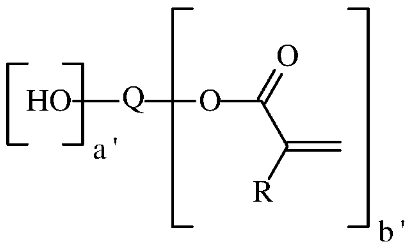
(1)

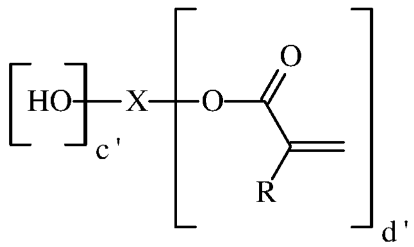
(2)

wherein

Q is a photoreactive linker;
X is a non-photoreactive linker;
each R is independently H or methyl, preferably H;
a' ranges from 0 to 8;
b' ranges from 0 to 8;
c' ranges from 0 to 16;
d' ranges from 0 to 16;

$$a' + b' = e';$$

$$c' + d' = f';$$

e' = 2 to 8; and
f' = 2 to 16;

with the proviso that the composition comprises:

- a compound 1a of formula (1) with a' is 0;
- at least one compound 1b of formula (1) with a' and b' are not 0;
- optionally a compound 1c of formula (1) with b' is 0;
- optionally a compound 2a of formula (2) with c' is 0;
- at least one compound 2b of formula (2) with c' and d' are not 0;
- optionally a compound 2c of formula (2) with d' is 0.

2. The binder according to claim 1, wherein e' < f', preferably e' + 1 ≤ f', more preferably

$$e' + 2 \leq f'.$$

**3.** The binder according to claim 1 or 2, wherein the molar percentage of compound 1c in mixture M1 is less than 10 %, in particular less than 5 %, more particularly less than 1 %, based on the number of moles of compounds of formula (1) in mixture M1.

**4.** The binder according to any one of claims 1 to 3, wherein the photoreactive linker Q comprises a photoinitiator moiety having Norrish type I activity and/or Norrish type II activity, in particular Norrish type II activity.

**5.** The binder according to any one of claims 1 to 4, wherein the photoreactive linker Q comprises a photoinitiator moiety comprising an optionally substituted aryl selected from thioxanthone, benzophenone, anthraquinone, xanthone, acridone and phenyl; in particular an optionally substituted aryl selected from benzophenone, thioxanthone or phenyl; more particularly an optionally substituted aryl selected from benzophenone or thioxanthone.

**6.** The binder according to any one of claims 1 to 5, wherein the photoreactive linker Q comprises a photoinitiator moiety having Norrish type II activity and further comprises at least one synergist moiety; in particular at least one synergist moiety having at least one hydrogen atom in alpha position to a nitrogen atom; more particularly at least one synergist moiety having at least one hydrogen atom in alpha position to the nitrogen atom of a secondary amine bond, a tertiary amine bond or a substituted amide bond.

**7.** The binder according to any one of claims 1 to 6, wherein Q corresponds to the following formula (Ia):

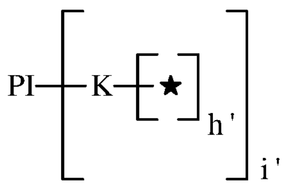

(Ia)

wherein

PI is a photoinitiator moiety;
each K is independently a linker comprising 1 to 50 carbon atoms;
each h' is independently 1, 2 or 3, in particular 2;
i' is 1, 2 or 3, in particular 1 or 2;
each symbol ★ represents a point of attachment to one of the hydroxy and (meth)acryloyloxy groups in formula (1) and the total number of symbols ★ corresponds to e' as defined in claim 1;

in particular Q corresponds to the following formula (Ib):

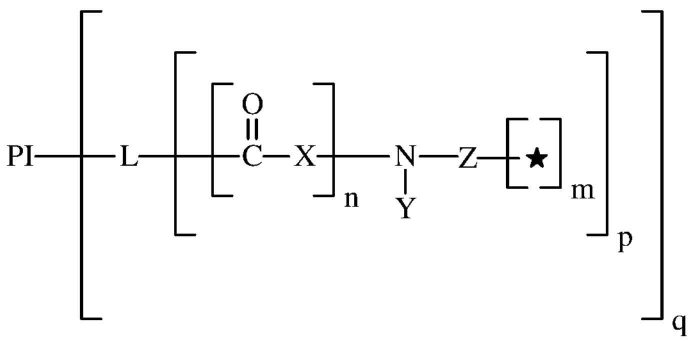

(Ib)

wherein

PI is a photoinitiator moiety;

each L is independently selected from a direct bond or a linker comprising 1 to 20 carbon atoms;
each X is independently selected from a direct bond and a linker comprising 1 to 6 carbon atoms;
each Y is independently H, alkyl or -Z'-[★]$_{m'}$;
each Z and Z' is independently a linker comprising 1 to 6, in particular 2 to 5, more particularly 2 to 4, carbon atoms;
each m and m' is independently 1, 2 or 3, in particular 1;
each n is independently 0 or 1, in particular 1;
each p is independently 1, 2 or 3; in particular 1 or 2;
q is 1, 2 or 3, in particular 1 or 2;
each symbol ★ represents a point of attachment to one of the hydroxy and (meth)acryloyloxy groups in formula (1) and the total number of symbols ★ corresponds to e' as defined in claim 1.

**8.** The binder according to claim 7, wherein PI corresponds to one of the following formulae (II) to (IX)

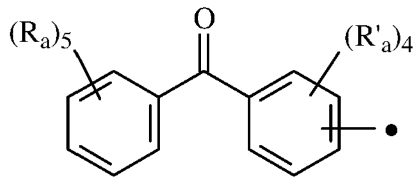
(II)

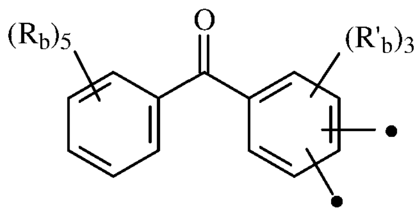
(III)

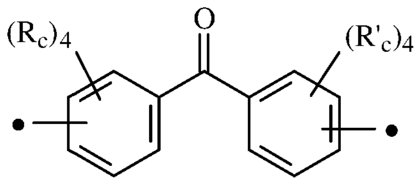
(IV)

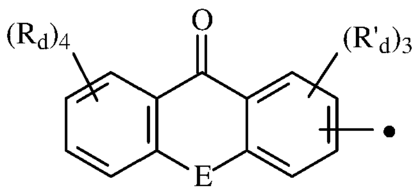
(V)

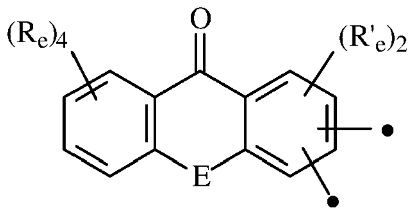
(VI)

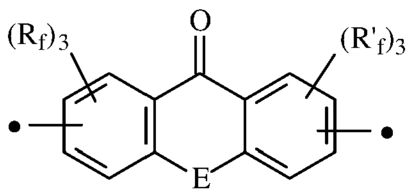
(VII)

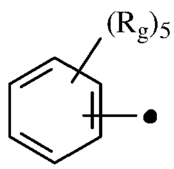
(VIII)

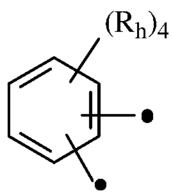
(IX)

wherein

E is S, O, C(=O) or $NR_1$, in particular S;
$R_1$ is H, an optionally substituted alkyl, an optionally substituted aryl;
each symbol ● represents a point of attachment to a linker K in formula (Ia) or to a linker L in formula (Ib);
each $R_a$, $R'_a$, $R_b$, $R'_b$, $R_c$, $R'_c$, $R_d$, $R'_d$, $R_e$, $R'_e$, $R_f$, $R'_f$, $R_g$ and $R_h$ is independently selected from H, F, Cl, Br, I, $-OR_a$, $-SR_a$, $-N(R_a)_2$, $-NO_2$, -CN, $-C(=O)R_2$, $-O-C(=O)R_2$, $-C(=O)OR_2$, $-C(=O)N(R_2)_2$, $-NR_2-C(=O)-R_2$, $-SO_2-N(R_2)_2$, or an optionally substituted group selected from alkyl, heteroatom-containing alkyl, cycloalkyl, heterocycloalkyl, alkenyl, alkynyl, aryl, aralkyl, alkaryl and heteroaryl;
two adjacent $R_a$, $R'_a$, $R_b$, $R'_b$, $R_c$, $R'_c$, $R_d$, $R'_d$, $R_e$, $R'_e$, $R_f$, $R'_f$, $R_g$ and $R_h$ groups may form, with the carbon atoms to which they are attached, a 5 to 8 membered ring;

each $R_2$ is independently H or an optionally substituted group selected from alkyl, cycloalkyl, heterocycloalkyl, alkenyl, alkynyl, aryl, aralkyl, alkaryl, heteroaryl and heteroatom-containing alkyl;
$R_3$ and $R_4$ are independently an optionally substituted group selected from aryl, alkyl, alkoxy or amino;
with the proviso that when PI corresponds to formula (VIII) or (IX), at least one -C(=O)-group is directly bonded to the phenyl moiety of formula (VIII) or (IX) at a symbol ● and/or at a substituent $R_g$ or $R_h$.

**9.** The binder according to any one of claims 1 to 8, wherein compound 2a has a number average molecular weight of 150 to 10,000 g/mol, in particular 200 to 6,000 g/mol, more particularly 300 to 5,000 g/mol.

**10.** The binder according to any one of claims 1 to 9, wherein X is selected from an aromatic, aliphatic or cycloaliphatic hydrocarbon linker, an isocyanurate linker, a polyether linker, a polyamine linker, a polysulfide linker, a polyester linker, a polycarbonate linker, a polycaprolactone linker, a polyurethane linker, a polyorganosiloxane linker, a polybutadiene linker, and combinations thereof;

in particular, X is selected from an aromatic, aliphatic or cycloaliphatic hydrocarbon linker, a polyether linker, a polyester linker and combinations thereof;
more particularly X is the residue of a polyol selected from di(pentaerythritol), an alkoxylated di(pentaerythritol), pentaerythritol, an alkoxylated pentaerythritol, di(trimethylolpropane), an alkoxylated di(trimethylolpropane), trimethylolpropane, an alkoxylated trimethylolpropane, glycerol, an alkoxylated glycerol, sorbitol, an alkoxylated sorbitol, a hyperbranched polyester polyol and combinations thereof.

**11.** The binder according to any one of claims 1 to 10, wherein the binder has a viscosity at 25°C of less than 10 Pa.s, in particular less than 5 Pa.s, more particularly less than 1 Pa. s., as determined by the method disclosed in the description.

**12.** A process for preparing a binder, the process comprising reacting at least one polyhydroxylated photoinitiator of formula (3) with at least one a multifunctional (meth)acrylate of formula (4), optionally in the presence of a transesterification catalyst, in order to transfer at least part of the (meth)acryloyl groups of the multifunctional (meth)acrylate of formula (4) on at least part of the hydroxy groups of the polyhydroxylated photoinitiator of formula (3):

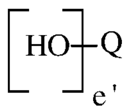 (3) 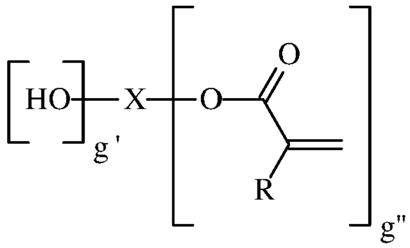 (4)

wherein

Q is a photoreactive linker, in particular Q is the residue of a polyhydroxylated photoinitiator;
X is a non-photoreactive linker, in particular X is the residue of a multifunctional (meth)acrylate;
each R is independently H or methyl;
e' = 2 to 8; and
g' = 0 to 2;
g" = 2 to 16
g' + g" = f' and
f' = 2 to 16.

**13.** A process for photopolymerizing one or more ethylenically unsaturated compounds comprising contacting one or more ethylenically unsaturated compounds with the binder according to any one of claims 1 to 11 or obtained according to the process of claim 12, and irradiating the mixture, in particular with visible and/or UV light.

**14.** A polymerizable composition comprising:

a) the binder according to any one of claims 1 to 11 or obtained according to the process of claim 12; and

optionally b) an ethylenically unsaturated compound;
in particular the polymerizable composition is an ink composition, an overprint varnish composition, a coating composition, an adhesive composition, a sealant composition, a molding composition, a dental composition, a cosmetic composition or a 3D-printing composition.

**15.** A process for the preparation of a cured product, comprising curing the binder according to any one of claims 1 to 11 or curing the polymerizable composition according to claim 14, in particular by exposing the binder or the polymerizable composition to radiation such as UV, near-UV and/or visible radiation.

**16.** A process of inkjet printing comprising jetting the binder according to any one of claims 1 to 11 or jetting the polymerizable composition according to claim 14 onto a substrate.

**17.** A substrate on which the binder according to any one of claims 1 to 11 or the polymerizable composition according to claim 14 has been applied, in particular the substrate is a food and beverage packaging, a pharmaceutical packaging, a textile, a nail, a tooth, a medical device, a food and beverage processing equipment, a water pipe.

**18.** A use of the binder according to any one of claims 1 to 11, as a photoinitiating system in a radiation curable composition, in particular in a UV or LED-curable composition.

**19.** A use of the binder according to any one of claims 1 to 11, in an ink composition, an overprint varnish composition, a coating composition, an adhesive composition, a sealant composition, a molding composition, a dental composition, a cosmetic composition or a 3D-printing composition.

**20.** A use of the binder according to any one of claims 1 to 11, to obtain a cured product having a reduced amount of extractables.

**Patentansprüche**

**1.** Bindemittel umfassend ein Gemisch M1 von Verbindungen der Formel (1) und ein Gemisch M2 von Verbindungen der Formel (2):

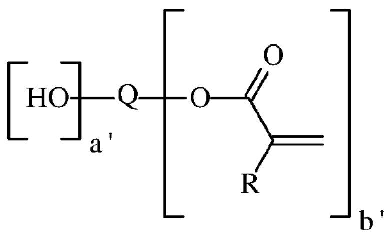 (1) 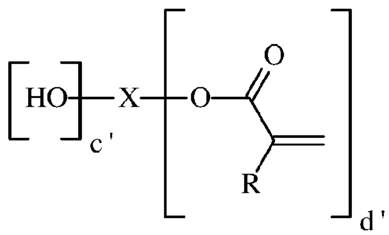 (2)

wobei

Q ein photoreaktiver Linker ist;
X ein nicht photoreaktiver Linker ist;
jedes R unabhängig H oder Methyl, vorzugsweise H, ist;
a’ in dem Bereich von 0 bis 8 liegt;
b’ in dem Bereich von 0 bis 8 liegt;
c’ in dem Bereich von 0 bis 16 liegt;
d’ in dem Bereich von 0 bis 16 liegt;

$$a' + b' = e';$$

$$c' + d' = f';$$

e’ = 2 bis 8; und

f' = 2 bis 16;

mit der Maßgabe, dass die Zusammensetzung umfasst:

- eine Verbindung 1a der Formel (1) mit a' gleich 0;
- wenigstens eine Verbindung 1b der Formel (1) mit a' und b' nicht gleich 0;
- gegebenenfalls eine Verbindung 1c der Formel (1) mit b' gleich 0;
- gegebenenfalls eine Verbindung 2a der Formel (2) mit c' gleich 0;
- wenigstens eine Verbindung 2b der Formel (2) mit c' und d' nicht gleich 0;
- gegebenenfalls eine Verbindung 2c der Formel (2) mit d' gleich 0.

**2.** Bindemittel gemäß Anspruch 1, wobei e' < f', vorzugsweise e' + 1 ≤ f', bevorzugter e' + 2 ≤ f'.

**3.** Bindemittel gemäß Anspruch 1 oder 2, wobei die Molprozent an Verbindung 1c in dem Gemisch M1 kleiner als 10 % sind, insbesondere kleiner als 5 %, weiter insbesondere kleiner als 1 %, bezogen auf die Molzahl von Verbindungen der Formel (1) in dem Gemisch M1.

**4.** Bindemittel gemäß einem der Ansprüche 1 bis 3, wobei der photoreaktive Linker Q eine Photoinitiatoreinheit mit Norrish-Typ-I-Aktivität und/oder Norrish-Typ-II-Aktivität, insbesondere Norrish-Typ-II-Aktivität, umfasst.

**5.** Bindemittel gemäß einem der Ansprüche 1 bis 4, wobei der photoreaktive Linker Q eine Photoinitiatoreinheit umfassend ein gegebenenfalls substituiertes Aryl ausgewählt aus Thioxanthon, Benzophenon, Anthrachinon, Xanthon, Acridon und Phenyl umfasst; insbesondere ein gegebenenfalls substituiertes Aryl ausgewählt aus Benzophenon, Thioxanthon und Phenyl; weiter insbesondere ein gegebenenfalls substituiertes Aryl ausgewählt aus Benzophenon und Thioxanthon.

**6.** Bindemittel gemäß einem der Ansprüche 1 bis 5, wobei der photoreaktive Linker Q eine Photoinitiatoreinheit mit Norrish-Typ-II-Aktivität umfasst und ferner wenigstens eine synergistische Einheit umfasst; insbesondere wenigstens eine synergistische Einheit mit wenigstens einem Wasserstoffatom in alpha-Position zu einem Stickstoffatom; weiter insbesondere wenigstens eine synergistische Einheit mit wenigstens einem Wasserstoffatom in alpha-Position zu dem Stickstoffatom einer sekundären Aminbindung, einer tertiären Aminbindung oder einer substituierten Amidbindung.

**7.** Bindemittel gemäß einem der Ansprüche 1 bis 6, wobei Q der folgenden Formel (Ia) entspricht:

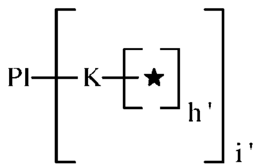

(Ia)

wobei

PI eine Photoinitiatoreinheit ist;
jedes K unabhängig ein Linker umfassend 1 bis 50 Kohlenstoffatome ist;
jedes h' unabhängig 1, 2 oder 3 ist, insbesondere 2;
i' 1, 2 oder 3 ist, insbesondere 1 oder 2;
jedes Symbol ★ einen Befestigungspunkt an eine der Hydroxy- und (Meth)acryloyloxygruppen in Formel (1) darstellt und die Gesamtanzahl an Symbolen ★ wie in Anspruch 1 definiertem e' entspricht;
insbesondere Q der folgenden Formel (Ib) entspricht:

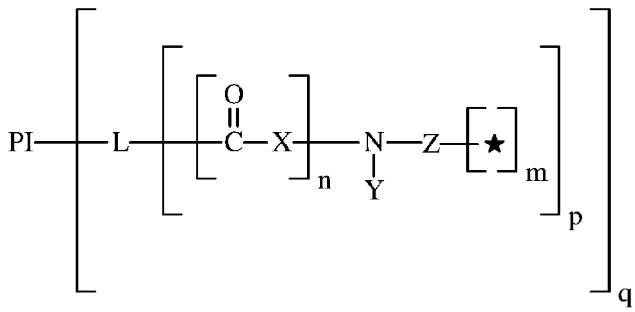

(Ib)

wobei

PI eine Photoinitiatoreinheit ist;

jedes L unabhängig ausgewählt ist aus einer direkten Bindung und einem Linker umfassend 1 bis 20 Kohlenstoffatome;

jedes X unabhängig ausgewählt ist aus einer direkten Bindung und einem Linker umfassend 1 bis 6 Kohlenstoffatome;

jedes Y unabhängig H, Alkyl oder -Z'-[★]$_{m'}$ ist;

jedes Z und Z' unabhängig ein Linker umfassend 1 bis 6, insbesondere 2 bis 5, weiter insbesondere 2 bis 4 Kohlenstoffatome ist;

jedes m und m' unabhängig 1, 2 oder 3 ist, insbesondere 1;

jedes n unabhängig 0 oder 1 ist, insbesondere 1;

jedes p unabhängig 1, 2 oder 3 ist, insbesondere 1 oder 2;

q 1, 2 oder 3 ist, insbesondere 1 oder 2;

jedes Symbol ★ einen Befestigungspunkt an eine der Hydroxy- und (Meth)acryloyloxygruppen in Formel (1) darstellt und die Gesamtanzahl an Symbolen ★ wie in Anspruch 1 definiertem e' entspricht.

**8.** Bindemittel gemäß Anspruch 7, wobei PI einer der folgenden Formeln (II) bis (IX) entspricht:

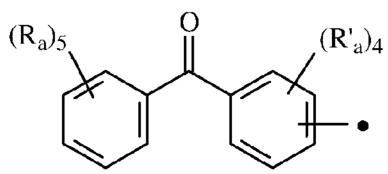

(II)

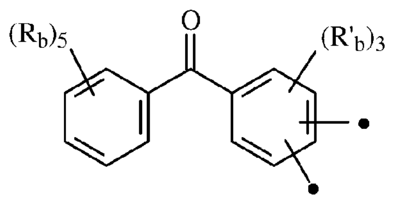

(III)

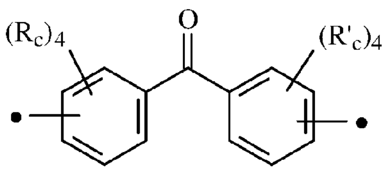

(IV)

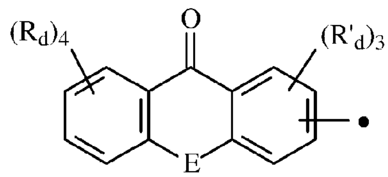

(V)

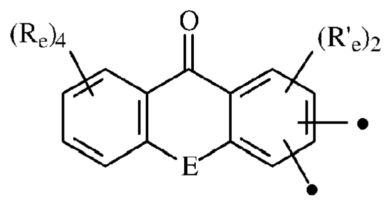

(VI)

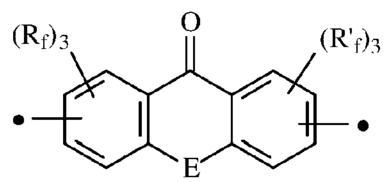

(VII)

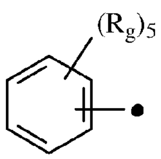 (VIII) 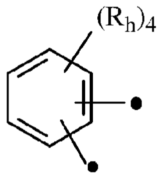 (IX)

wobei

E S, O, C(=O) oder $NR_1$ ist, insbesondere S;
$R_1$ H, ein gegebenenfalls substituiertes Alkyl, ein gegebenenfalls substituiertes Aryl ist;
jedes Symbol ● einem Befestigungspunkt an einen Linker K in Formel (Ia) oder an einen Linker L in Formel (Ib) darstellt;
jedes $R_a$, $R'_a$, $R_b$, $R'_b$, $R_c$, $R'_c$, $R_b$, $R'_d$, $R_e$, $R'_e$, $R_f$, $R'_f$, $R_g$ und $R_h$ unabhängig ausgewählt ist aus H, F, Cl, Br, I, $-OR_a$, $-SR_a$, $-N(R_a)_2$, $-NO_2$, -CN, $-C(=O)R_2$, $-O-C(=O)R_2$, $-C(=O)OR_2$, $-C(=O)N(R_2)_2$, $-NR_2-C(=O)-R_2$, $-SO_2-N(R_2)_2$ und einer gegebenenfalls substituierten Gruppe ausgewählt aus Alkyl, Heteroatom-enthaltendem Alkyl, Cycloalkyl, Heterocycloalkyl, Alkenyl, Alkinyl, Aryl, Aralkyl, Alkaryl und Heteroaryl;
zwei benachbarte Gruppen $R_a$, $R'_a$, $R_b$, $R'_b$, $R_c$, $R'_c$, $R_a$, $R'_d$, $R_e$, $R'_e$, $R_f$, $R'_f$, $R_g$ und $R_h$ mit den Kohlenstoffatomen, an die sie gebunden sind, einen 5- bis 8-gliedrigen Ring bilden können;
jedes $R_2$ unabhängig H oder eine gegebenenfalls substituierte Gruppe ausgewählt aus Alkyl, Cycloalkyl, Heterocycloalkyl, Alkenyl, Alkinyl, Aryl, Aralkyl, Alkaryl, Heteroaryl und Heteroatom-enthaltendem Alkyl ist;
$R_3$ und $R_4$ unabhängig eine gegebenenfalls substituierte Gruppe ausgewählt aus Aryl, Alkyl, Alkoxy und Amino sind; mit der Maßgabe, dass, wenn PI Formel (VIII) oder (IX) entspricht, wenigstens eine -C(=O)-Gruppe an einem Symbol ● und/oder an einem Substituenten $R_g$ oder $R_h$ direkt an die Phenyleinheit der Formel (VIII) oder (IX) gebunden ist.

**9.** Bindemittel gemäß einem der Ansprüche 1 bis 8, wobei Verbindung 2a ein anzahlgemitteltes Molekulargewicht von 150 bis 10.000 g/mol, insbesondere 200 bis 6.000 g/mol, weiter insbesondere 300 bis 5.000 g/mol, aufweist.

**10.** Bindemittel gemäß einem der Ansprüche 1 bis 9, wobei X ausgewählt ist aus einem aromatischen, aliphatischen oder cycloaliphatischen Kohlenwasserstoff-Linker, einem Isocyanurat-Linker, einem Polyether-Linker, einem Polyamin-Linker, einem Polysulfid-Linker, einem Polyester-Linker, einem Polycarbonat-Linker, einem Polycaprolacton-Linker, einem Polyurethan-Linker, einem Polyorganosiloxan-Linker, einem Polybutadien-Linker und Kombinationen davon;

insbesondere X ausgewählt ist aus einem aromatischen, aliphatischen oder cycloaliphatischen Kohlenwasserstoff-Linker, einem Polyether-Linker, einem Polyester-Linker und Kombinationen davon;
weiter insbesondere X ein Rest eines Polyols ausgewählt aus Di(pentaerythritol), einem alkoxylierten Di(pentaerythritol), Pentaerythritol, einem alkoxylierten Pentaerythritol, Di(trimethylolpropan), einem alkoxylierten Di(trimethylolpropan), Trimethylolpropan, einem alkoxylierten Trimethylolpropan, Glycerol, einem alkoxylierten Glycerol, Sorbitol, einem alkoxylierten Sorbitol, einem hyperverzweigten Polyesterpolyol und Kombinationen davon ist.

**11.** Bindemittel gemäß einem der Ansprüche 1 bis 10, wobei das Bindemittel eine Viskosität bei 25 °C von weniger als 10 Pa.s, insbesondere weniger als 5 Pa.s, weiter insbesondere weniger als 1 Pa.s, wie bestimmt durch das in der Beschreibung offenbarte Verfahren, aufweist.

**12.** Verfahren zur Herstellung eines Bindemittels, wobei das Verfahren Umsetzen wenigstens eines polyhydroxylierten Photoinitiators der Formel (3) mit wenigstens einem multifunktionellen (Meth)acrylat der Formel (4) umfasst, gegebenenfalls in Gegenwart eines Umesterungskatalysators, um wenigstens einen Teil der (Meth)acryloylgruppen des multifunktionellen (Meth)acrylats der Formel (4) auf wenigstens einem Teil der Hydroxygruppem des polyhydroxylierten Photoinitiators der Formel (3) zu überführen:

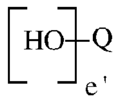
(3)

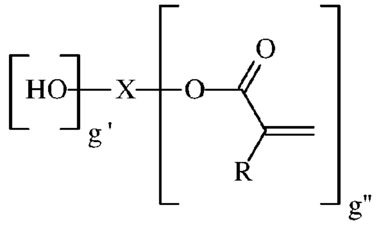
(4)

wobei

Q ein photoreaktiver Linker ist, insbesondere Q der Rest eines polyhydroxylierten Photoinitiators ist;
X ein nicht photoreaktiver Linker ist, insbesondere X der Rest eines multifunktionellen (Meth)acrylats ist;
jedes R unabhängig H oder Methyl ist;
e' = 2 bis 8; und
g' = 0 bis 2;
g" = 2 bis 16;
g' + g" = f' und
f' = 2 bis 16.

**13.** Verfahren zur Photopolymerisation einer oder mehrerer ethylenisch ungesättigter Verbindungen, umfassend Inkontaktbringen einer oder mehrerer ethylenisch ungesättigter Verbindungen mit dem Bindemittel gemäß einem der Ansprüche 1 bis 11 oder erhalten gemäß dem Verfahren von Anspruch 12 und Bestrahlen des Gemischs, insbesondere mit sichtbarem und/oder UV-Licht.

**14.** Polymerisierbare Zusammensetzung, umfassend:

a) das Bindemittel gemäß einem der Ansprüche 1 bis 11 oder erhalten gemäß dem Verfahren von Anspruch 12; und gegebenenfalls b) eine ethylenisch ungesättigte Verbindung;
wobei insbesondere die polymerisierbare Zusammensetzung eine Tintenzusammensetzung, eine Überdrucklackzusammensetzung, eine Beschichtungszusammensetzung, eine Klebstoffzusammensetzung, eine Dichtmittelzusammensetzung, eine Formzusammensetzung, eine Dentalzusammensetzung, eine kosmetische Zusammensetzung oder eine 3D-Druck-Zusammensetzung ist.

**15.** Verfahren zur Herstellung eines gehärteten Produkts, umfassend Härten des Bindemittels gemäß einem der Ansprüche 1 bis 11 oder Härten der polymerisierbaren Zusammensetzung gemäß Anspruch 14, insbesondere durch Exponieren des Bindemittels oder der polymerisierbaren Zusammensetzung gegenüber Strahlung, wie z.B. UV-, Nah-UV- und/oder sichtbarer Strahlung.

**16.** Verfahren zum Tintenstrahldrucken, umfassend Strahlen des Bindemittels gemäß einem der Ansprüche 1 bis 11 oder Strahlen der polymerisierbaren Zusammensetzung gemäß Anspruch 14 auf ein Substrat.

**17.** Substrat, auf dem das Bindemittel gemäß einem der Ansprüche 1 bis 11 oder die polymerisierbare Zusammensetzung gemäß Anspruch 14 aufgebracht worden ist, wobei das Substrat insbesondere eine Lebensmittel-und Getränkeverpackung, eine pharmazeutische Verpackung, ein Textilgegenstand, ein Nagel, ein Zahn, eine medizinische Vorrichtung, eine Lebensmittel- und Getränkeverarbeitungsanlage, ein Wasserrohr ist.

**18.** Verwendung des Bindemittels gemäß einem der Ansprüche 1 bis 11 als Photoinitiatorsystem in einer strahlungshärtbaren Zusammensetzung, insbesondere in einer UV- oder LED-härtbaren Zusammensetzung.

**19.** Verwendung des Bindemittels gemäß einem der Ansprüche 1 bis 11 in einer Tintenzusammensetzung, einer Überdrucklackzusammensetzung, einer Beschichtungszusammensetzung, einer Klebstoffzusammensetzung, einer Dichtmittelzusammensetzung, einer Formzusammensetzung, einer Dentalzusammensetzung, einer kosmetischen Zusammensetzung oder einer 3D-Druck-Zusammensetzung.

**20.** Verwendung des Bindemittels gemäß einem der Ansprüche 1 bis 11, um ein gehärtetes Produkt mit einer verringerten Menge an extrahierbaren Stoffen zu erhalten.

## Revendications

**1.** Liant comprenant un mélange M1 de composés de formule (1) et un mélange M2 de composés de formule (2) :

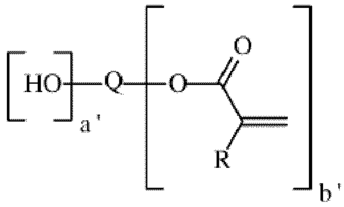 (1) 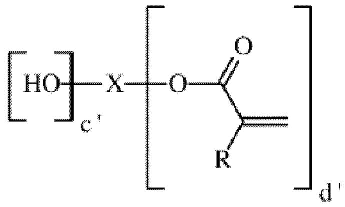 (2)

Q étant un lieur photoréactif ;
X étant un lieur non photoréactif ;
chaque R étant indépendamment H ou méthyle, préférablement H ;
a’ se situant dans la plage de 0 à 8 ;
b’ se situant dans la plage de 0 à 8 ;
c’ se situant dans la plage de 0 à 16 ;
d’ se situant dans la plage de 0 à 16 ;

$$a' + b' = e';$$

$$c' + d' = f';$$

e’ = 2 à 8 ; et
f’ = 2 à 16 ;

à la condition que la composition comprenne :

- un composé 1a de formule (1), a’ étant 0 ;
- au moins un composé 1b de formule (1), a’ et b’ n’étant pas 0 ;
- éventuellement un composé 1c de formule (1), b’ étant 0 ;
- éventuellement un composé 2a de formule (2), c’ étant 0 ;
- au moins un composé 2b de formule (2), c’ et d’ n’étant pas 0 ;
- éventuellement un composé 2c de formule (2), d’ étant 0.

**2.** Liant selon la revendication 1, $e' < f'$, préférablement $e' + 1 \leq f'$, plus préférablement $e' + 2 \leq f'$.

**3.** Liant selon la revendication 1 ou 2, le pourcentage molaire du composé 1c dans le mélange M1 étant inférieur à 10 %, en particulier inférieur à 5 %, plus particulièrement inférieur à 1 %, sur la base du nombre de moles de composés de formule (1) dans le mélange M1.

**4.** Liant selon l’une quelconque des revendications 1 à 3, le lieur photoréactif Q comprenant un groupement photoinitiateur ayant une activité Norrish de type I et/ou une activité Norrish de type II, en particulier une activité Norrish de type II.

**5.** Liant selon l’une quelconque des revendications 1 à 4, le lieur photoréactif Q comprenant un groupement photoinitiateur comprenant un aryle éventuellement substitué choisi parmi une thioxanthone, une benzophénone, une anthraquinone, une xanthone, une acridone et un phényle ; en particulier un aryle éventuellement substitué choisi parmi une benzophénone, une thioxanthone ou un phényle ; plus particulièrement un aryle éventuellement substitué choisi parmi une benzophénone ou une thioxanthone.

**6.** Liant selon l’une quelconque des revendications 1 à 5, le lieur photoréactif Q comprenant un groupement photoinitiateur ayant une activité Norrish de type II et en outre comprenant au moins un groupement synergiste ; en particulier au moins un groupement synergiste ayant au moins un atome d’hydrogène en position alpha par rapport à un atome

d'azote ; plus particulièrement au moins un groupement synergiste ayant au moins un atome d'hydrogène en position alpha par rapport à l'atome d'azote d'une liaison d'amine secondaire, d'une liaison d'amine tertiaire ou d'une liaison d'amide substitué.

**7.** Liant selon l'une quelconque des revendications 1 à 6, Q correspondant à la formule suivante (Ia) :

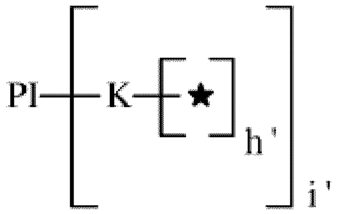
(Ia)

PI étant un groupement photoinitiateur ;
chaque K étant indépendamment un lieur comprenant 1 à 50 atomes de carbone ;
chaque h' étant indépendamment 1, 2 ou 3, en particulier 2 ;
i' étant 1, 2 ou 3, en particulier 1 ou 2 ;
chaque symbole * représentant un point de fixation à l'un parmi les groupes hydroxy et (méth)acryloyloxy dans la formule (1) et le nombre total de symboles * correspondant à e' tel que défini dans la revendication 1 ;
en particulier Q correspondant à la formule suivante (Ib) :

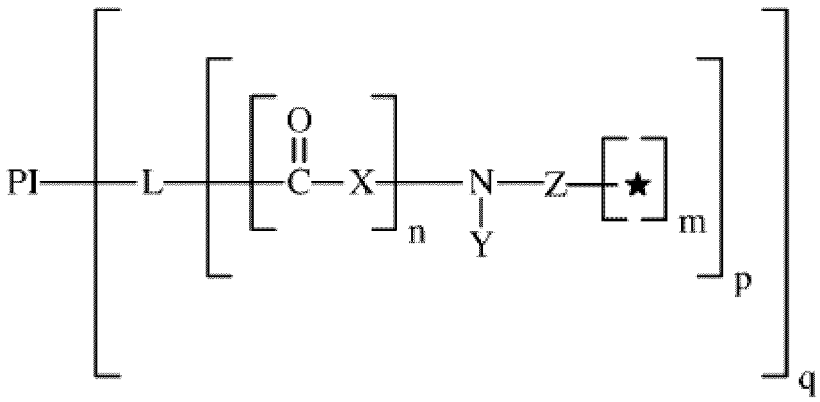
(Ib)

PI étant un groupement photoinitiateur ;
chaque L étant indépendamment choisi parmi une liaison directe ou un lieur comprenant 1 à 20 atomes de carbone ;
chaque X étant indépendamment choisi parmi une liaison directe et un lieur comprenant 1 à 6 atomes de carbone ;
chaque Y étant indépendamment H, alkyle ou -Z'-$[\bigstar]_{m'}$;
chaque Z et Z' étant indépendamment un lieur comprenant 1 à 6, en particulier 2 à 5, plus particulièrement 2 à 4, atomes de carbone ;
chaque m et m' étant indépendamment 1, 2 ou 3, en particulier 1 ;
chaque n étant indépendamment 0 ou 1, en particulier 1 ;
chaque p étant indépendamment 1, 2 ou 3 ; en particulier 1 ou 2 ;
q étant 1, 2 ou 3, en particulier 1 ou 2 ;
chaque symbole * représentant un point de fixation à l'un parmi les groupes hydroxy et (méth)acryloyloxy dans la formule (1) et le nombre total de symboles * correspondant à e' tel que défini dans la revendication 1.

**8.** Liant selon la revendication 7, PI correspondant à l'une des formules suivantes (II) à (IX)

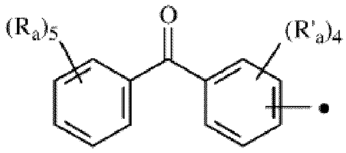
(II)

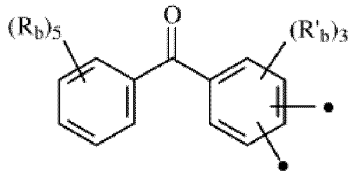
(III)

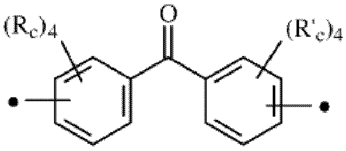
(IV)

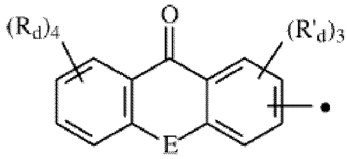
(V)

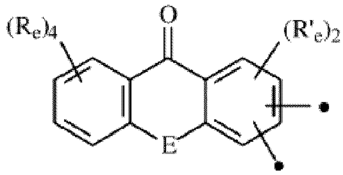
(VI)

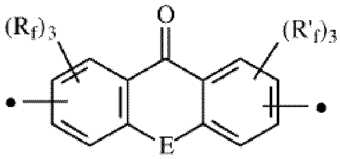
(VII)

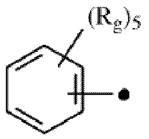
(VIII)

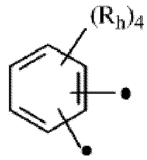
(IX)

E étant S, O, C (=O) ou $NR_1$, en particulier S ;

$R_1$ étant H, un alkyle éventuellement substitué, un aryle éventuellement substitué ;

chaque symbole ● représentant un point de fixation à un lieur K dans la formule (Ia) ou à un lieur L dans la formule (Ib) ;

chaque $R_a$, $R'_a$, $R_b$, $R'_b$, $R_c$, $R'_c$, $R_d$, $R'_d$, $R_e$, $R'_e$, $R_f$, $R'_f$, $R_g$ et $R_h$ étant indépendamment choisi parmi H, F, Cl, Br, I, $-OR_a$, $-SR_a$, $-N(R_a)_2$, $-NO_2$, -CN, $-C(=O)R_2$, $-O-C(=O)R_2$, $-C(=O)OR_2$, $-C(=O)N(R_2)_2$, $-NR_2-C(=O)-R_2$, $-SO_2-N(R_2)_2$, ou un groupe éventuellement substitué choisi parmi alkyle, alkyle contenant un hétéroatome, cycloalkyle, hétérocycloalkyle, alcényle, alcynyle, aryle, aralkyle, alkaryle et hétéroaryle ;

deux groupes $R_a$, $R'_a$, $R_b$, $R'_b$, $R_c$, $R'_c$, $R_d$, $R'_d$, $R_e$, $R'_e$, $R_f$, $R'_f$, $R_g$ et $R_h$ adjacents pouvant former, avec les atomes de carbone auxquels ils sont fixés, un cycle à 5 à 8 chaînons ; chaque $R_2$ étant indépendamment H ou un groupe éventuellement substitué choisi parmi alkyle, cycloalkyle, hétérocycloalkyle, alcényle, alcynyle, aryle, aralkyle, alkaryle, hétéroaryle et alkyle contenant un hétéroatome ;

$R_3$ et $R_4$ étant indépendamment un groupe éventuellement substitué choisi parmi aryle, alkyle, alcoxy ou amino ; à la condition que lorsque PI correspond à la formule (VIII) ou (IX), au moins un groupe -C(=O)-est directement lié au groupement phényle de la formule (VIII) ou (IX) au niveau d'un symbole ● et/ou au niveau d'un substituant $R_g$ ou $R_h$.

**9.** Liant selon l'une quelconque des revendications 1 à 8, le composé 2a ayant un poids moléculaire moyen en nombre de 150 à 10 000 g/mole, en particulier 200 à 6 000 g/mole, plus particulièrement 300 à 5 000 g/mole.

**10.** Liant selon l'une quelconque des revendications 1 à 9, X étant choisi parmi un lieur hydrocarboné aromatique, aliphatique ou cycloaliphatique, un lieur isocyanurate, un lieur polyéther, un lieur polyamine, un lieur polysulfure, un lieur polyester, un lieur polycarbonate, un lieur polycaprolactone, un lieur polyuréthane, un lieur polyorganosiloxane, un lieur polybutadiène et des combinaisons correspondantes ;

en particulier, X étant choisi parmi un lieur hydrocarboné aromatique, aliphatique ou cycloaliphatique, un lieur polyéther, un lieur polyester et des combinaisons correspondantes ;

plus particulièrement X étant le radical d'un polyol choisi parmi le di(pentaérythritol), un di(pentaérythritol alcoxylé), le pentaérythritol, un pentaérythritol alcoxylé, le di(triméthylolpropane), un di(triméthylolpropane alcoxylé), le triméthylolpropane, un triméthylolpropane alcoxylé, le glycérol, un glycérol alcoxylé, le sorbitol, un sorbitol alcoxylé, un polyester polyol hyperramifié et des combinaisons correspondantes.

**11.** Liant selon l'une quelconque des revendications 1 à 10, le liant ayant une viscosité à 25 °C inférieure à 10 Pa.s, en particulier inférieure à 5 Pa.s, plus particulièrement inférieure à 1 Pa.s, comme déterminée par le procédé divulgué dans la description.

**12.** Procédé pour la préparation d'un liant, le procédé comprenant la mise en réaction d'au moins un photoinitiateur polyhydroxylé de formule (3) avec au moins un (méth)acrylate multifonctionnel de formule (4), éventuellement en la présence d'un catalyseur de transestérification, afin de transférer au moins une partie des groupes (méth)acryloyle du (méth)acrylate multifonctionnel de formule (4) sur au moins une partie des groupes hydroxyle du photoinitiateur polyhydroxylé de formule (3) :

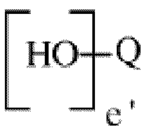
(3)

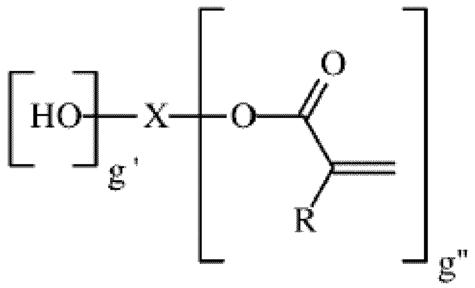
(4)

Q étant un lieur photoréactif, en particulier Q étant le radical d'un photoinitiateur polyhydroxylé ;
X étant un lieur non photoréactif, en particulier X étant le radical d'un (méth)acrylate multifonctionnel ;
chaque R étant indépendamment H ou méthyle ;
e' = 2 à 8 ; et
g' = 0 à 2 ;
g" = 2 à 16

$$g' + g'' = f'$$

et
f' = 2 à 16.

**13.** Procédé pour la photopolymérisation d'un ou plusieurs composés éthyléniquement insaturés comprenant la mise en contact d'un ou plusieurs composés éthyléniquement insaturés avec le liant selon l'une quelconque des revendications 1 à 11 ou obtenu selon le procédé selon la revendication 12, et l'irradiation du mélange, en particulier avec de la lumière visible et/ou UV.

**14.** Composition photopolymérisable comprenant :

a) le liant selon l'une quelconque des revendications 1 à 11 ou obtenu selon le procédé selon la revendication 12 ; et
éventuellement b) un composé éthyléniquement insaturé ;
en particulier la composition polymérisable étant une composition d'encre, une composition de vernis de surimpression, une composition de revêtement, une composition d'adhésif, une composition d'agent d'étanchéité, une composition de moulage, une composition dentaire, une composition cosmétique ou une composition d'impression en 3D.

**15.** Procédé pour la préparation d'un produit durci, comprenant le durcissement du liant selon l'une quelconque des revendications 1 à 11 ou le durcissement de la composition polymérisable selon la revendication 14, en particulier par exposition du liant ou de la composition polymérisable à un rayonnement tel qu'un rayonnement UV, UV proche et/ou visible.

**16.** Procédé d'impression par jet d'encre comprenant la projection du liant selon l'une quelconque des revendications

1 à 11 ou la projection de la composition polymérisable selon la revendication 14 sur un substrat.

**17.** Substrat sur lequel le liant selon l'une quelconque des revendications 1 à 11 ou la composition polymérisable selon la revendication 14 a été appliqué(e), en particulier le substrat étant un emballage de produit alimentaire et de boisson, un emballage pharmaceutique, un textile, un ongle, une dent, un dispositif médical, un appareil de transformation de produit alimentaire et de boisson, une conduite d'eau.

**18.** Utilisation du liant selon l'une quelconque des revendications 1 à 11, comme un système de photoinitiation dans une composition durcissable par un rayonnement, en particulier dans une composition durcissable par UV ou LED.

**19.** Utilisation du liant selon l'une quelconque des revendications 1 à 11, dans une composition d'encre, une composition de vernis de surimpression, une composition de revêtement, une composition d'adhésif, une composition d'agent d'étanchéité, une composition de moulage, une composition dentaire, une composition cosmétique ou une composition d'impression en 3D.

**20.** Utilisation du liant selon l'une quelconque des revendications 1 à 11, pour obtenir un produit durci ayant une quantité réduite de substances extractibles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3429852 A
- WO 2014126830 A
- WO 2014126834 A
- WO 2014126837 A


### Non-patent literature cited in the description


- Radiation Curing in Science and Technology. Elsevier Appl. Sci, 1993, vol. 2, 283-321
- **FOUASSIER, J. P.** Photoinitiation, Photopolymerization and Photocuring, Fundamentals and Applications. Hanser Publishers, 1995, 71-73
- **DAVID, C. ; DEMARTEU, W. ; GEUSKENS, G.** *Polymer,* 1969, vol. 10, 21-27
- **CARLINI, C. ; CIARDELLI, F. ; DONATI, D. ; GURZONI, F.** *Polymer,* 1983, vol. 24, 599-606
- **HERBST, WILLY et al.** Industrial Organic Pigments, Production, Properties, Applications. Wiley - VCH, 2004
- **TUMBLESTON et al.** Continuous Liquid Interface Production of 3D Objects. *Science,* 20 March 2015, vol. 347 (6228), 1349-1352